# NEW EUROPEAN PATENT SPECIFICATION

(11) **EP 3 645 300 B2**
(45) Date of publication and mention of the opposition decision: **31.12.2025**
(45) Mention of the grant of the patent: 28.09.2022
(21) Application number: 18739602.3
(22) Date of filing: 28.06.2018
(51) Int. Cl.: B42D 25/324, B42D 25/328, B42D 25/342, B42D 25/351, B42D 25/373, B42D 25/23, B42D 25/24, B42D 25/29, B42D 25/425, B42D 25/45, G02B 3/00

(54) **SECURITY ELEMENTS AND METHODS OF MANUFACTURE THEREOF**
SICHERHEITSELEMENTE UND VERFAHREN ZUR HERSTELLUNG DAVON
ÉLÉMENTS DE SÉCURITÉ ET LEURS PROCÉDÉS DE FABRICATION

(30) Priority: 29.06.2017 GB 201710430
(43) Date of publication of application: 06.05.2020
(73) Proprietor: De La Rue International Limited, Basingstoke Hampshire RG22 4BS (GB)
(72) Inventor: HOLMES, Brian, Fleet Hampshire GU51 5HZ (GB); FOURNIER, Fred, Thatcham Berkshire RG18 3AT (GB)
(74) Representative: Gill Jennings & Every LLP
(86) International application number: PCT/GB2018/051814
(87) International publication number: WO 2019/002872

(56) References cited:
- WO-A1-2012/027779
- WO-A1-2014/095057
- WO-A1-2015/011493
- WO-A1-2015/011494
- WO-A1-2016/151284
- WO-A1-2017/011476
- US-A- 4 417 784

## Description

### FIELD OF THE INVENTION

The present invention relates to security elements such as those suitable for use in security documents such as banknotes, identity documents, passports, certificates and the like, as well as methods for manufacturing such security elements.

### DESCRIPTION OF THE RELATED ART

To prevent counterfeiting and enable authenticity to be checked, security documents are typically provided with one or more security elements which are difficult or impossible to replicate accurately with commonly available means, particularly photocopiers, scanners or commercial printers.

One conventional type of security element is a so-called lenticular security element. In a lenticular security element, an array of focusing elements, typically cylindrical lenses, overlies a corresponding array of image sections, or "slices", each of which depicts only a portion of an image which is to be displayed. Image slices from two or more different images are interlaced and, when viewed through the focusing elements, at each viewing angle, only selected image slices will be directed towards the viewer. In this way, different composite images can be viewed at different angles. Some examples of lenticular security elements are described in US 4892336 A, WO 2011/051669 A1, WO 2011051670 A2, WO 2012/027779 A1 and US 6856462 B. Lenticular security elements have the advantage that different images can be displayed at different viewing angles, giving rise to the possibility of animation and other striking visual effects which are not possible using the moire magnifier or integral imaging techniques.

A disadvantage with conventional lenticular security elements is that they typically only exhibit an optically variable effect in one direction of tilt. More recently, two-dimensional lenticular security elements have also been developed and examples of these are disclosed in WO 2015/011493 A1 and WO 2015/011494 A1.

While these two-dimensional lenticular security elements represent one solution to the problem experienced with conventional one-dimensional lenticular devices, it is desirable to provide other solutions to this problem that provide more secure and more visually striking optical security effects.

Another example of a lenticular security element may be found in WO 2012027779 A1.

### SUMMARY OF THE INVENTION

According to a first aspect of the present invention, there is provided a security element as defined in claim 1 and, according to a second aspect of the invention, there is provided a security element as defined in claim 13.

The security element according to the first aspect comprises an array of focussing elements that focus light in a first direction. By this, it is meant that the focussing elements have focussing power along one lateral direction such that light that interacts with the focussing element is focussed. The first array of focussing elements are adapted to focus light only in the first direction, i.e. they have no focussing power in the lateral direction orthogonal to the first direction. Preferably the array of focussing elements is an array of cylindrical lenses. Cylindrical lenses are an example of focussing elements that typically focus light only in the first direction. Other cylindrical focussing elements, such as cylindrical mirrors could also be used.

As described above, the security element further comprises an array of image strips overlapping the array of focussing elements. These image strips will typically be disposed on a substrate and carried in an image element plane spaced from the focussing element plane in which the focussing elements are disposed. Typically, the image elements will be arranged so as to lie in or close to the focal plane defined by the array of focussing elements, i.e. that plane defined by the focal points of each of the focussing elements. In some embodiments, the image elements may be provided on one side of a substantially transparent layer and the focussing elements provided on the other side of the substantially transparent layer.

These image strips comprise at least a first set of image strips and a second set of image strips, but could comprise more. The first and second sets of image strips are interlaced along the first direction. For example, where only first and second sets of image elements are used, those image elements of the first set and second set may be provided in an alternating manner along the first direction. As with a conventional lenticular security element, the first and second sets of image strips will typically carry a respective image for displaying via the focussing elements by means of the individual image strips each carrying a respective portion or "slice" of the corresponding images. In the following discussion, the image displayed by the first set of image elements when viewed via the focussing elements may be referred to as a first "channel" and the image displayed by the second set of image elements when viewed via the focussing elements referred to as a second "channel". As mentioned above, these channels will be exhibited to a viewer at different viewing angles in a direction of tilt about the second direction, with the precise viewing angle ranges being determined by, for example, the size and positioning of the image strips relative to the focussing elements.

The present invention provides optical variability in two different directions of tilt by providing that each of at least a first subset of the image strips of the first set of image strips comprises a first region having a first optically variable effect generating relief structure and a second region having a second optically variable effect generating relief structure configured such that the appearances of the first and second regions vary differently as the security element is rotated about the first direction. In other words, the first channel will exhibit optical variability as the viewing angle is changed by rotation of the element about the first direction and, to some degree, the appearance of the first regions will change relative to the appearance of the second regions to produce a visually striking effect. The first and second regions need not be provided in every image strip of the first set of image strips, but in certain embodiments, the first subset of the image strips of the first set of image strips comprises all of the first set of image strips. In alternative embodiments, the first subset comprises only some of the first set of image strips. In these cases, the remaining image strips of the first set of image strips may comprise neither an optically variable effect generating structure according to the first or second regions. For example, the remaining image strips may define part of an optically invariable background such as by using printed image strips. In another alternative those remaining image strips may comprise the optically variable effect generating structure of the first region and not the second region, or vice versa. The precise image elements of the first set that carry both the first and second regions is freely configurable depending upon the desired image to be displayed.

As mentioned, the optically variable effect generating relief structures of the first and second regions differ in at least one of the pitch of the relief structure, the orientation of the relief structure and the size, shape and/or profile of the elements of the relief structure so as to produce appearances of the first and second regions that vary differently as the device is tilted about the first direction. For example, diffractive relief structures, particularly diffraction gratings (including square gratings, sinusoidal gratings and sawtooth gratings as well as blazed gratings), may be used as the optically variable effect generating relief structures, although other types of structures are foreseeable. Preferably, the optically variable effect generating relief structure comprises a diffractive device which comprises a structure operating in either the first order of diffraction or zero order diffraction, and which would be categorised as a form of form of DOVID (diffractive optically variable image device), as described in Optical Document Security, 2nd edition by Van Renesse, which includes spatial domain oriented structures, graphical domain oriented structures, pixel domain oriented structures, track oriented structures, vector oriented structures & time domain oriented structures. Specific examples include a Kinegram^{®} or an Exelgram^{®}. In these cases, the relief structures may be configured to have different orientations of the diffractive elements in the plane of the security element, i.e. azimuthal orientation. Varying orientation can be used, for example, to configure the viewing angles in a direction of tilt about the first direction over which an optically variable effect is exhibited by the relief structure. Alternatively, or in addition, the diffractive relief structures may be provided with different pitches (or element spacing), which may configure both the viewing angle range over which the effect is exhibited and the colour(s) exhibited. Finally, the size and shape of the elements of the relief structure, such as the height or width, may be varied to further configure the optically variable effect exhibited.

Preferably, the orientation of the first optically variable effect generating relief structure differs from the orientation of the second optically variable effect generating relief structure such that, as the security element is rotated about the first direction, the first region exhibits a first optically variable effect over a first viewing angle range and the second region exhibits a second optically variable effect over a second viewing angle range different from the first viewing angle range. For example, the first and second regions may be configured such that there is substantially no viewing angle range over which both optically variable effects generated by the first and second regions are displayed, i.e. at the same time. The first and second optically variable effect generating structures may also differ in at least one of the pitch of the relief structure, and the size, shape and profile of the elements of the relief structure. This can provide that the first and second optically variable effects differ in appearance from one another over their respective viewing angle ranges. Furthermore, the pitch of the relief structure, and the size, shape and profile of the elements of the relief structure can also be used to control the viewing angle range over which the respective effects are viewed and so can be configured to be different such that, as the security element is rotated about the first direction, the first region exhibits a first optically variable effect over a first viewing angle range and the second region exhibits a second optically variable effect over a second viewing angle range different from the first viewing angle range.

In some embodiments, the first optically variable effect generating relief structure differs from the second optically variable effect generating relief structure in at least one of the pitch of the relief structure, the orientation of the relief structure and the size, shape and profile of the elements of the relief structure such that, as the security element is rotated about the first direction, the first region exhibits a first optically variable effect and the second region exhibits a second optically variable effect different from the first optically variable effect. For example, the first region may be configured to generate a first diffractive colour or colour range and the second region configured to generate a second diffractive colour or colour range, which may be displayed over the same or different viewing angle ranges.

In embodiments according to the second aspect of the invention, each of the first set of image strips carries a respective portion of a first optically variable image, and the first and second regions of the first subset of the first set of image strips are spatially arranged in accordance with image information of the first optically variable image. An image displayed by the security element may be considered optically variable when the appearance of the security element varies at least partly over 180° of rotation about the first direction. In these embodiments, the image is defined by the presences of the first and second regions. For example, where the optically variable image is a symbol viewed against a background, the first regions may be provided across the image strips in accordance with the body of the symbol, while the second regions are provided elsewhere across the image strips to define the background to the symbol. Preferably, the first region provides a first colour component of the first optically variable image, wherein the first optically variable effect generating relief structure is configured (i.e. by pitch, orientation and relief structure element size, shape and profile) to exhibit a first diffractive colour effect over a first viewing angle range as the security element is rotated about the first direction, and the second region provides a second colour component of the first optically variable image, wherein the second optically variable effect generating relief structure is configured (i.e. by pitch, orientation and relief structure element size, shape and profile) to exhibit a second diffractive colour effect over at least some of the first viewing angle range as the security element is rotated about the first direction. For example, the first set of image strips may be divided into areas corresponding to pixels of the final image. Each pixel may be selectively provided with gratings or the like configured to produce colour components, e.g. red, green and blue colour effects, to build up a full colour image across the first set of image strips.

In embodiments according to the first aspect of the invention, each image strip of the first subset of the first set of image strips comprises a plurality of first image areas and a plurality of second image areas, the first image areas and the second image areas being interlaced with one another along each image strip of the first subset of the first set of image strips, and the first region of each image strip of the first subset of the first set of image strips is distributed over the first image areas and the second region of each image strip of the first subset of the first set of image strips is distributed over the second image areas. These first and second image areas are interlaced along the length of the image strips. This will typically be along the second direction, i.e. perpendicular to the direction of interlacing of the image strips. Interlacing regions of different optically variable effect generating relief structures in this manner allows the production of particularly preferable optical effects, particularly where the interlacing is performed with a pitch of 150 µm or less, preferably 100 µm or less, more preferably 70 µm or less, such that the interlacing is indistinguishable to the human eye, down to as little as 5 µm.

In embodiments according to the first aspect of the invention, each of the first set of image strips carries a respective portion of a first optically variable image, the first optically variable image comprising at least first and second sub-images, wherein the first region of each image strip of the first subset of the first set of image strips is spatially arranged within the first image areas in accordance with image information of the first sub-image and wherein the second region of each image strip of the first subset of the first set of image strips is spatially arranged within the second image areas in accordance with image information of the second sub-image. The optically variable effect generating relief structure of each first region is configured (i.e. by pitch, orientation and relief structure element size, shape and profile) such that, as the security element is rotated about the first direction, the first regions exhibit a first optically variable effect over a first viewing angle range, thereby displaying the first sub-image and the second optically variable effect generating relief structure of each second region is configured (i.e. by pitch, orientation and relief structure element size, shape and profile) such that, as the security element is rotated about the first direction, the second regions exhibit a second optically variable effect over a second viewing angle range, different from the first viewing angle range, thereby displaying the second sub-image.

Such embodiments allow the security element to exhibit, for example, optical variability of the first channel that comprises a first sub-image displayed by the first regions at viewing angles over which the first optically variable effect is generated and a second image displayed by the second regions at viewing angles over which the second optically variable effect is generated. Where the interlacing is indistinguishable to the human eye, the viewer may perceive the first sub-image of the first channel over substantially the whole area of the security element, when viewed at a corresponding viewing angle, and the viewer may also perceive the second sub-image of the first channel over the whole area of the security element, when viewed at a corresponding viewing angle.

The optically variable effect generating structures may be configured such that the first and second sub-images are exhibited simultaneously at certain viewing angles corresponding to an overlap of the viewing angle ranges of the first and second regions. However, in preferable embodiments, the first viewing angle range and the second viewing angle range are configured by the pitch, orientation and relief structure element size, shape or profile so as to substantially not overlap such that an image switch effect between the first sub-image and the second sub-image is exhibited by the first and second regions upon rotation of the security element about the first direction. Such a security element may therefore exhibit an image switch upon rotation of the security element about the second direction, corresponding to a switch between the first and second channels, and further exhibit, for at least the first channel, an image switch upon rotation of the security element about the first direction, corresponding to a switch between the first and second sub-images generated by the first and second regions respectively.

In some embodiments the first and/or second sub-images may be multi-coloured. For example, a first multi-coloured sub-image may be achieved by providing that the first regions are first colour component regions of the first sub-image, wherein the first optically variable effect generating relief structure is configured (i.e. by pitch, orientation and relief structure element size, shape and profile) to exhibit a first diffractive colour effect over a first viewing angle range as the security element is rotated about the first direction, and wherein the first image areas additionally comprise second colour component regions of the first sub-image, the second colour component regions having an optically variable effect generating relief structure with a pitch, orientation and relief structure element size configured to exhibit a second diffractive colour effect over the first viewing angle range, the first and second colour component regions being arranged (across the first image areas) to provide first and second colour components of the first sub-image. Typically, each first image area will be partitioned in a direction along the first (or second) direction into sub-areas assigned to carry the first and second colour component regions respectively.

Additionally, the first image areas may also comprise third colour component regions of the first sub-image, the third colour component regions having an optically variable effect generating relief structure with a pitch, orientation and relief structure element size configured to exhibit a third diffractive colour effect over the first viewing angle range, the third colour component regions being arranged to provide a third colour component of the first sub-image.

Preferably, at least at one viewing angle, the first, second and third colour component regions are configured to exhibit red, green and blue diffractive colours, thereby providing red, green and blue components of a full colour sub-image. It will be appreciated that one or more of these colours may be configured to exhibit a distinguishable colour variation upon tilting about the first direction.

In some embodiments, each first image area may be generally partitioned into two sub-areas, preferably at least three sub-areas, that provide multiple colour components to each first image area of the first sub-image, such that each image area acts as a coloured pixel of the sub-image. In these embodiments, the first, second, and optionally third, colour component regions may be distributed across the first image areas, by either being present or absent in the sub-areas corresponding to the desired overall colour of the corresponding first image area to build up the sub-image across the security element.

While the above has focussed on configuring the first set of image strips to provide the first channel with optical variability upon rotation about the first direction, it will be appreciated that in many preferable embodiments, the principles described above will be applied to the second set of image strips to provide the second channel with similar optical variability. The second set of image strips need not define the same type of effect as the first image strips. For example, the first set of image strips may comprise interlaced image areas for defining first and second sub-images, while the second set of image strips may comprise no interlacing along the strip direction. While the design of the first set of image strips does not restrict the design that may be followed for the second set of strips, it is particularly advantageous that the sets of image strips are coordinated to produce related optical effects to produce a more visually striking security element.

Specifically, in some preferable embodiments, each of a first subset of the second set of image strips comprises a third region having a third optically variable effect generating relief structure. In some embodiments, the third region may cover the entire of each strip of the second set of image strips. However, preferably each of the second set of image strips carries a respective portion of a second optically variable image, and the third regions are spatially arranged in accordance with image information of the second optically variable image. The third optically variable effect generating relief structure may be freely configured in the pitch of the relief structure, the orientation of the relief structure and the size of the elements of the relief structure to produce the desired optical effect. In particular, the third optically variable effect generating relief structure may be configured to match the pitch of the relief structure, the orientation of the relief structure and the size of the elements of the first or second optically variable relief structures to provide a visual connection between the first and second channels, or may be configured differently so as to exhibit a different optically variable effect than either region of the first channel. In some embodiments, the third regions may be configured to provide a colour-altered version of one of the first or second regions. For example, where the first and second regions of the first set of image strips define for the first channel an optically variable symbol against an optically variable background, the third region may be disposed to provide an optically variable, colour-altered version of the symbol, which may be viewed against an optically invariable background.

As with the first channel, it is preferable that the second channel also exhibits at least two different optically variable effects. Therefore, preferably, each of the first subset of the second set of image strips comprises a fourth region having a fourth optically variable effect generating relief structure, wherein the third optically variable effect generating relief structure differs from the fourth optically variable effect generating relief structure in at least one of the pitch of the relief structure, the orientation of the relief structure and the size, shape and profile of the elements of the relief structure such that the appearances of the third and fourth regions vary differently as the security element is rotated about the first direction. Preferably, the fourth regions are spatially arranged in accordance with image information of the second optically variable image. In particular, where the second channel comprises two different optically variable effect generating structures, the second optically variable image may preferably be a colour-altered version of the first optically variable image, for example, by arranging the third and fourth regions analogously to the first and second regions but configuring the relief structures to provide different diffractive colour effects.

In some embodiments, each image strip of the first subset of the second set of image strips comprises a plurality of third image areas and a plurality of fourth image areas, the third image areas and the fourth image areas being interlaced with one another along each image strip of the first subset of the second set of image strips, and wherein the third region of each image strip is distributed over the third image areas and wherein the fourth region of each image strip is distributed over the fourth image areas, wherein each image strip of the first subset of the second set of image strips carries a respective portion of a second optically variable image, the second optically variable image comprising at least third and fourth sub-images, wherein the third region of each image strip of the first subset of the second set of image strips is spatially arranged across the third image areas in accordance with image information of the third sub-image and wherein the fourth region of each image strip of the first subset of the second set of image strips is spatially arranged across the fourth image areas in accordance with image information of the fourth sub-image. Further preferably, the optically variable effect generating relief structure of each third region is configured (i.e. by pitch, orientation and relief structure element size, shape and profile) such that, as the security element is rotated about the first direction, the third regions exhibit a third optically variable effect over a third viewing angle range, thereby displaying the third sub-image and wherein the fourth optically variable effect generating relief structure of each fourth region is configured (i.e. by pitch, orientation and relief structure element size, shape and profile) such that, as the security element is rotated about the first direction, the fourth regions exhibit a second optically variable effect over a fourth viewing angle range, thereby displaying the fourth sub-image. Where both the first and second channels are provided by interlaced optically variable effect generating structures, four or more different images can be displayed at different viewing angles within the same area of the security element.

In some particularly preferable embodiments, the or each optically variable image defines a change in form of an image between the corresponding sub-images of the optically variable image. For example, the second sub-image may be a form altered version of the first sub-image. Further preferably, the first and second optically variable images define a change in form of an image between the first and second optically variable images. For example, the third sub-image may be a form altered version of the first sub-image and the fourth sub-image a form altered version of the second sub-image. As will be appreciated, switching between the first and second or third and fourth sub-images is achieved by rotating the security element about the first direction, while switching between the first and second optically variable images is achieved by rotating the security element about the second direction. Preferably, the first, second, third and fourth sub-images are different forms of the same image and further preferably represent a change in form that corresponds to the direction of rotation between the sub-images. For example, the sub-images of the first optically variable image may be configured such that a rotation of the security element about the first direction gives the impression of corresponding rotation of the information content of the first and second sub-image. Similarly, the first and second optically variable images may be configured such that a rotation of the security element about the second direction gives the impression of corresponding rotation of the information content of the first and second optically variable images.

In embodiments comprising three or more optically variable images provided by three or more sets of image strips, preferably, the optically variable images define a change in form of an image between a first form and a second form and then a reversal of the sequence back to the first form, the combined image sequences presenting a contiguous variation in the image form. This means that any offset in registration of the image strips along the first direction will not impact the appearance of the security element as the contiguous form variation has no clear start or end to the image sequence. More information regarding continuous form variation of lenticular images may be found in WO 2017/009616 A1. In these embodiments, a continuous form variation may be provided upon changing between the different image channels provided by the image strips, together with either a continuous or non-continuous form variation provided by the sub-images of each image channel. Non-continuous may be used because the relief structure parameters control the viewing angle of the sub-images, and there is no issue with registration affecting which sub-images appear first and last in a sequence of sub-images.

As mentioned above, in at least embodiments according to the first aspect of the invention one or more of the optically variable effect generating relief structures comprise a diffractive relief structure, such as a diffraction grating, for generating an optically variable effect that is a diffractive optical effect. Particularly preferably, the first region comprises a first diffraction grating having a first orientation and the second region comprises a second diffraction grating having a second orientation different from the first orientation.

Diffraction gratings with a pitch of at least 500 nm include those typically referred to as first order diffraction gratings. Within the plane of dispersion, which is parallel to the direction of grating periodicity, the diffracted orders for each colour are located either side of the angle of specular reflection, in accordance with the standard diffraction equation. These diffraction gratings typically exhibit strong iridescence or colour change on tilting in the plane of dispersion. Diffraction gratings with a pitch of less than 500 nm include those typically referred to as zero order diffraction gratings. In these devices, first order diffraction may still be visible in a steep Littrow viewing configuration (where the top of the device is strongly tilted towards the observer), but such gratings are typically highly dispersing, requiring a large tilt to progress through diffractive colours. These zero order diffraction gratings also exhibit zero order subtractive colour effects along the specular direction, which are non-dispersive but highly angularly variable. Typically, for zero order diffraction gratings, it will be these zero order subtractive colour effects that are utilised to provide the optical variability to corresponding regions of the security device upon tilting about the first direction.

While diffraction gratings are preferable, other optically variable effect generating relief structures may be utilised in the present invention. Other examples of optically variable effect generating relief structures include those disclosed in pending British patent application number GB1615258.9.

The present invention is not limited to two sets of image strips and preferably the array of image strips further comprises at least a third set of image strips (although more may be provided), wherein the first, second and third sets of image strips are interlaced along the first direction, and wherein the first, second and third sets of image strips each have a periodicity along the first direction that is substantially the same as, or an integral multiple of, a periodicity of the array of focussing elements. Again, preferably this set of image strips produces an optically variable third channel by means analogous to those discussed above with respect to the first and second channels. For example, preferably a first subset of the third set of image strips comprises at least a fifth region having a fifth optically variable effect generating relief structure.

Another phenomenon that can be utilised as part of the present invention is the suppression of a diffractive a colour spectrum that results when an array of lenses is arranged over a diffraction grating whose grating lines extend generally in the same direction as the array of lenses. In some embodiments, one or more of the optically variable effect generating relief structures comprises a diffraction grating for generating an optically variable effect that is a diffractive optical effect, the diffraction grating comprising grating elements that are oriented at an angle of at most 45° to the second direction, preferably at most 20° to the second direction, more preferably at most 10° to the second direction, such that the diffractive optical effect is suppressed by the focussing elements. It will be appreciated that a smaller angle between the grating elements and the second direction will result in greater suppression of the diffractive colours in the diffractive effect. In some such embodiments, the suppression of the diffractive effect may be utilised to provide optical variability that appears to the viewer as a switch between an inactive appearance, at angles where no diffraction is observed, and an active appearance, where all diffractive colours are visible, but in a superposed, or suppressed, manner. In many embodiments which utilise this phenomenon, diffraction gratings whose grating lines extend generally in the same direction as the array of lenses will be used to provide both the first and second optically variable effect generating structures.

In contrast, in some embodiments, one or more of the optically variable effect generating relief structures comprises a diffraction grating for generating an optically variable effect that is a diffractive optical effect, the diffraction grating comprising grating elements that are oriented at an angle of at most 45° to the first direction, preferably at most 20° to the first direction, more preferably at most 10° to the first direction, such that the diffractive optical effect is displayed via the focussing elements. In these embodiments, any diffractive spectrum may not be suppressed by the focussing elements so that a variation in diffractive colours is visible.

In some embodiments, at least some of the image strips of the first set of image strips comprise one or more additional regions, such as background regions, preferably optically invariable regions, not comprising either of the first or second optically variable effect generating relief structures. These regions may, for example, comprise a light absorbing or anti-reflection relief structure, such as a moth-eye relief structure, configured to provide a dark, substantially optically invariable background over substantially all viewing angles. Examples of the use of such structures in security devices may be found in WO 2005106601 A2. These structures typically comprise an array of identical structural elements having a pitch less than 700 nm, typically less than 500 nm. The structural elements may, for example, be substantially cone-shaped and the structure will typically absorb light across the visible spectrum. These background regions may be provided in any of the remaining sets of image strips and may cover any proportion of the image strips, i.e. they may provide cover only a small region of the security device.

According to a third aspect of the present invention, there is provided a method of forming a security element as defined in claim 12 and, according to a fourth aspect of the invention, there is provided a method of forming a security element as defined in claim 14.

Methods for forming the optically variable effect generating structures with the required shape and structure include laser photolithography and e-beam lithography.

It will be appreciated that the method according to the third and fourth aspects of the invention can be adapted to produce any one of the preferable embodiments of the security element according to the first and second aspects described above, which share those advantages described above.

### BRIEF DESCRIPTION OF THE DRAWINGS

Embodiments of the invention will now be described with reference to the accompanying drawings, in which:
Figure 1 shows an array of cylindrical lenses suitable for use in embodiments of the invention in a perspective view;
Figure 2 shows, in schematic cross-section, a security element according to a first embodiment;
Figures 3A and 3B show, schematically, the interlaced image strips of the first embodiment and the appearance of the security element when those image strips are viewed through a corresponding array of focussing elements respectively;
Figures 4A and 4B show, schematically, the arrangement of image strips of a security element according to a second embodiment, and the number of views at which a different image is displayed by the security element respectively;
Figures 5A and 5B show, schematically, the arrangement of image strips of a security element according to a third embodiment, and the number of views at which a different image is displayed by the security element respectively;
Figures 6A to 6E show, schematically, the arrangement of image strips of a security element according to a fourth embodiment and the appearance of the security element at a number of viewing angles;
Figures 7A to 7F shows, schematically, a security element according to a fifth embodiment;
Figure 8A and 8B show, schematically, the arrangement of image strips of a security element according to a sixth embodiment, and the number of views at which a different image is displayed by the security element respectively; and
Figure 9A to 9C show, schematically, the arrangement of image strips of a security element according to a comparative example at three different levels of magnification.

### DETAILED DESCRIPTION OF THE DRAWINGS

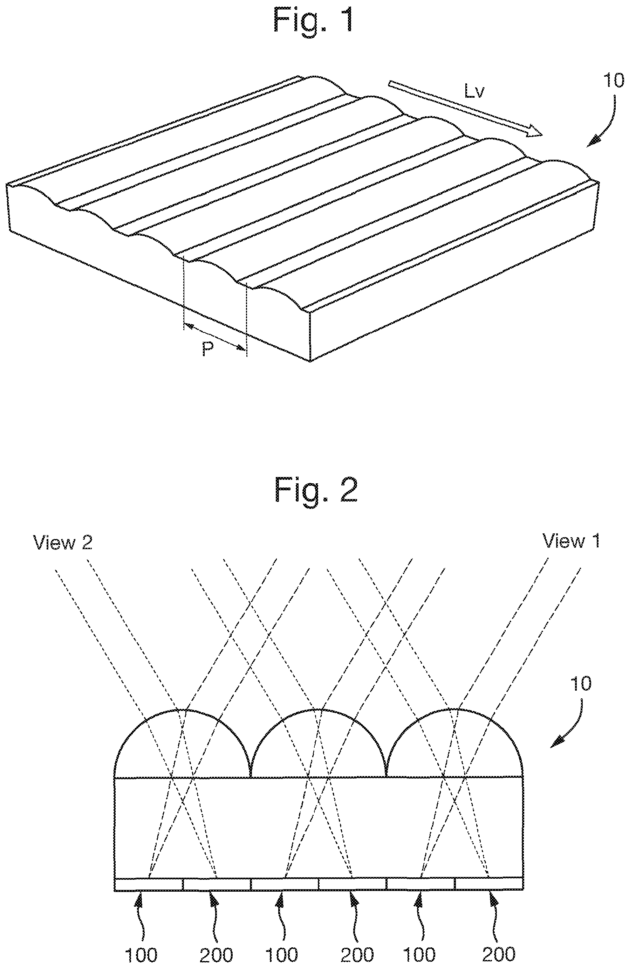

Figure 1 shows an array of cylindrical lenses 10 of a security element according to the invention. The array of cylindrical lenses are arranged so as to repeat along a lens vector direction Lv, referred to throughout the present description as the first direction. The cylindrical lenses are elongate and extend in a direction perpendicular to this first direction, this direction being referred to as the second direction throughout this description. The array of lenses has a pitch P, which is the repeat distance along the first direction of the cylindrical lens elements making up the array of lenses. The array of lenses is formed in a substantially transparent layer, with the upper surface of said layer forming the lens relief profile that defines the array of lenses. Only five lenses are shown in Figure 1 for clarity, with the subsequent figures also only showing a small number of lenses; however, it will be appreciated that a typical array of lenses will comprise many more lenses than shown in the Figures. For example, a typical security element may be on the order of 1 cm by 1 cm, while each lens may have a pitch on the order of 10 µm, or less.

Figure 2 shows the interaction of the array of cylindrical lenses 10 with an array of image strips 100, 200 overlapping the array of lenses. Here, the array of image strips is arranged on the lower surface of the substantially transparent layer carrying the lens relief profile. In this embodiment, the lens relief profile is configured such that the image strips arranged on the lower surface lie substantially in the focal plane defined by the array of lenses.

Each image strip of the array of image strips 100, 200 is an elongate image strip that runs along the entire length of the lens with which it is associated. In this embodiment, each lens overlaps two image strips, a first image strip from a first set of image strips 100 and a second image strip from a second set of image strips 200. The first and second sets of image strips each have a periodicity along the first direction that is substantially the same as the periodicity, or pitch P, of the array of lenses such that each image strip of the first and second sets is located in the same relative position beneath their corresponding lens as the other image strips of the corresponding first and second set. Figure 2 demonstrates that the result of this is that, at a first viewing angle in a direction of rotation about the second direction, each lens of the array of lenses samples the corresponding image strip of the first set of image strips 100 and at second viewing in a direction of rotation about the second direction, each lens of the array of lenses samples the corresponding image strip of the second set of image strips 200. Accordingly, at the first and second viewing angles, the array of lenses exhibit images as defined by the first and second sets of image elements respectively, these images also being referred to as image channels in the present description.

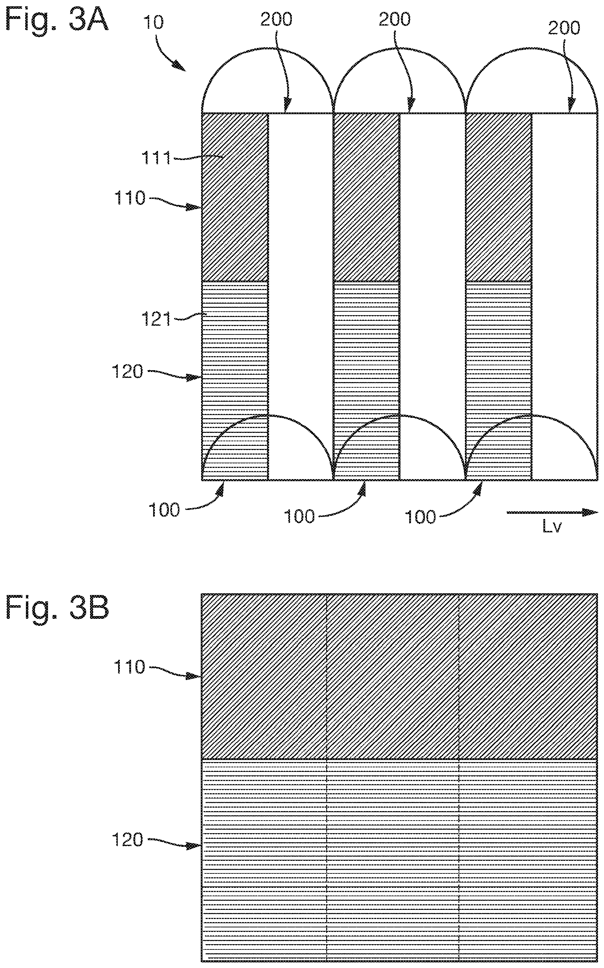

Figure 3A shows the design of the arrays of image strips of the security element of Figure 2. In this case, each image strip of the first set of image strips 100 comprises a first region 110 and a second region 120. The first region 110 comprises a first optically variable effect generating relief structure, which is a first diffraction grating 111. This first diffraction grating has a first diffraction grating pitch and orientation, which are the spacing and direction of extension of the grating elements. The second region 120 comprises a second optically variable effect generating relief structure, which is a second diffraction grating 121. This second diffraction grating has a second diffraction grating pitch and orientation that are different from that of the first diffraction grating. The design of the second set of image strips 200 is not shown in Figure 3A and any optically variable or invariable design may be used to either complement or contrast the design of the first set of image elements.

Figure 3B shows the image displayed by the security element when the first set of image strips 100 are viewed through the array of lenses at the appropriate viewing angle about the second direction. Here, the viewer sees an image defined by the combination of all of the image strips of the first set 100. As each image strip of the first set 100 comprises first and second regions 110, 120, the image displayed is made up of first and second regions 110, 120. The image shown in Figure 3B will exhibit optical variability owing to the diffraction gratings 111, 121 arranged over the first and second regions. Specifically, as the security element is rotated about the first direction, the diffraction gratings 111, 121 will replay their corresponding diffractive effects. Since the diffraction gratings are provided with different orientations and pitches, the diffractive effects that they replay will be different such that the appearances of the first and second regions 110, 120 vary differently upon rotation about the first direction.

The above described principal can be applied to produce complex and visually striking optical effects that further enhance security, as will be described below.

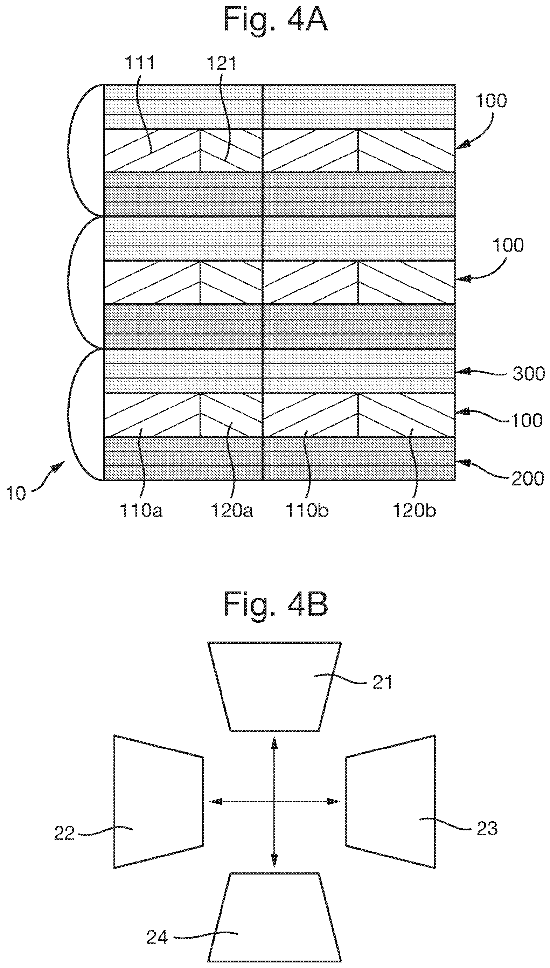

Figures 4A and 4B illustrate how the first and second regions can be utilised to provide the security element with additional image views. While a conventional lenticular is typically limited to a number of views (i.e. different images) corresponding to the number of image element strips underneath each lens, the optical variability provided by the first and second regions can be used to provide each image channel with multiple images. Figure 4B shows the different views at which the security element exhibits a different image (images 21 to 24). It should be noted here that the particular images displayed by the security element are not shown in Figure 4B, and substantially any image could be displayed.

In the embodiment of Figure 4A, the security element is provided with lenses 10 extending horizontally and three image strips 100, 200, 300 are provided beneath each lens. The first image strips 100 are provided beneath the middle of each lens so as to provide a central image channel and comprise a plurality of first image areas 110a, 110b interlaced among a plurality of second image areas 120a, 120b along the length of the image strip 100. While only two of each image areas are shown per strip in Figure 4A, it will be appreciated that many more will typically be provided per image strip. For example, the image areas will typically, individually, be on a scale indiscernible to the human eye, with the collective appearance generating the sub-images. In this embodiment, the second and third image strips 200 and 300 are provided either side of the first image strip beneath each lens with either an optically invariable design, e.g. as provided by a print, or an optically variable design that generates an optically variable image not composed of multiple sub-images.

The first region 110, comprising the first grating 111, is distributed across the first image areas 110a, 110b in accordance with image information of a first sub-image 22. For example, the first grating 111 may be provided only in some of the first image areas, such that the first image areas with the grating act as "bright" pixels and the first image areas without the grating act as "dark" pixels in building up the first sub-image. The first grating is provided with an orientation configured to exhibit a diffractive effect at a first viewing angle in a direction of rotation about the first direction such that when the security element is viewed at that angle, the first regions 110 appear bright and exhibit the first sub-image 22. In this case, the grating elements are rotated anti-clockwise from a direction in which they are parallel with the second direction (i.e. the direction of extension of the lenses).

The second region 120, comprising the second grating 121, is distributed across the second image areas 120a, 120b in accordance with image information of a second sub-image 23. Like the first, the second grating 121 may be provided only in some of the second image areas, such that the second image areas with the grating act as "bright" pixels and the second image areas without the grating act as "dark" pixels in building up the second sub-image. The second grating is provided with an orientation configured to exhibit a diffractive effect at a second viewing angle in a direction of rotation about the second direction such that when the security element is viewed at that angle, the second regions 120 appear bright and exhibit the second sub-image 23. In this case, the grating elements are rotated clockwise from a direction in which they are parallel with the second direction (i.e. the direction of extension of the lenses).

With the security element arranged such that the first image strips 100 are visible through the lenses, i.e. viewing at the normal to the security element, rotation of the security element about the first direction will switch between the first and second sub-images 22, 23 owing to the different viewing angles at which those gratings 111, 121 exhibit their diffractive effect. Further, rotation of the security element about the second direction, perpendicular to the first direction, will switch to the images 21, 24 provided by the second and third sets of image strips 200, 300 respectively.

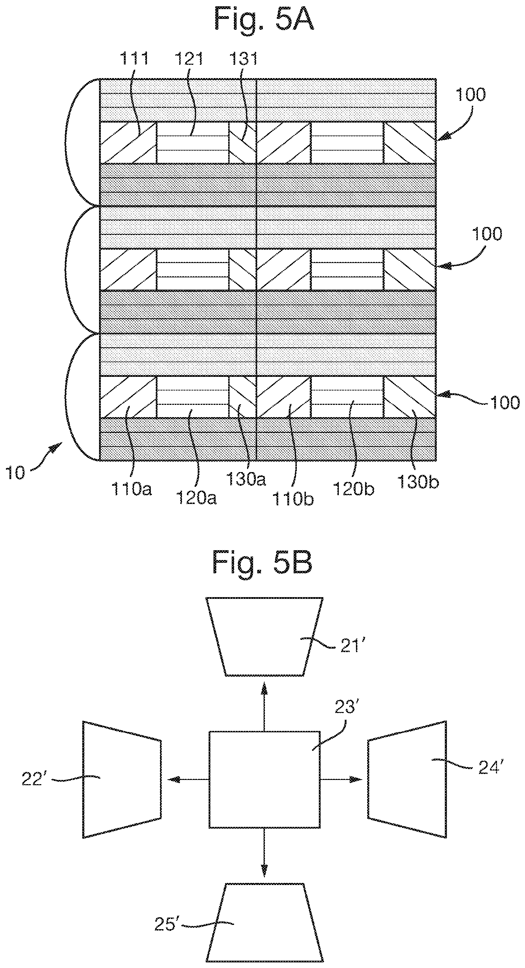

Figures 5A and 5B illustrate how the optically variable image strips can be used to show more than two views. The image strips of this embodiment are configured similarly to that of Figure 4A, but the first image strips 100 are divided into first, second and third interlaced image areas 110a, 110b, 120a, 120b, 130a, 130b. Again, the image areas are interlaced along the length of each image strip. Here, the first image areas 110a, 110b, are selectively provided with a first diffraction grating 111 in accordance with a first sub-image 22', the second image areas 120a, 120b, are selectively provided with a second diffraction grating 121 in accordance with a second sub-image 23', and the third image areas 130a, 130b, are selectively provided with a third diffraction grating 131 in accordance with a third sub-image 24'.

The first grating is provided with an orientation configured to exhibit a diffractive effect at a first viewing angle in a direction of rotation about the first direction such that when the security element is viewed at that angle, the first regions 110 appear bright and exhibit the first sub-image 22'. In this case, the grating elements are rotated anti-clockwise from a direction in which they are parallel with the second direction (i.e. the direction of extension of the lenses).

The second grating is provided with an orientation configured to exhibit a diffractive effect at a second viewing angle in a direction of rotation about the first direction such that when the security element is viewed at that angle, the second regions 120 appear bright and exhibit the second sub-image 23'. In this case, the grating elements are parallel with the second direction (i.e. the direction of extension of the lenses).

The third grating is provided with an orientation configured to exhibit a diffractive effect at a third viewing angle in a direction of rotation about the first direction such that when the security element is viewed at that angle, the third regions 130 appear bright and exhibit the third sub-image 24'. In this case, the grating elements are rotated clockwise from a direction in which they are parallel with the second direction (i.e. the direction of extension of the lenses).

With the security element arranged such that the first image strips 100 are visible through the lenses, i.e. viewing at the normal to the security element, rotation of the security element about the first direction will switch between the first, second and third sub-images 22', 23', 24' owing to the different viewing angles at which those gratings 111, 121, 131 exhibit their diffractive effect. In this case, the second image areas provide that a sub-image is configured for viewing substantially at the normal, while the first and third image areas provide a sub-image configured for viewing upon rotation away from the normal in either direction about the first direction. Again, rotation of the security element about the second direction, perpendicular to the first direction, will switch to the images 21', 25' provided by the second and third sets of image strips 200, 300 respectively.

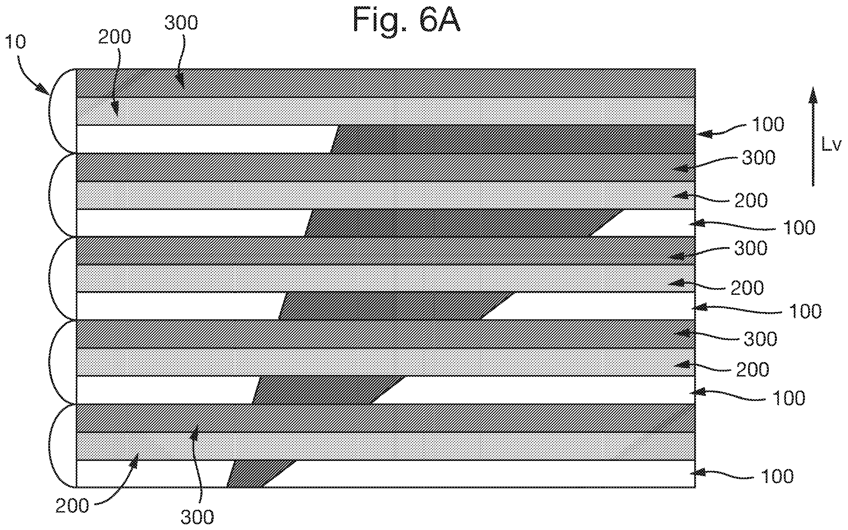

Figures 6A to 6E show another example security element. As shown in Figure 6A, the present security element comprises a regular array of cylindrical lenses 10, as described above, and a corresponding array of image elements 100, 200, 300, that comprise three sets of image elements. The three sets of image elements define three image channels at corresponding viewing angles in a direction of rotation of the security element about the second direction. In this embodiment, each image channel is optically variable upon rotation of the security element about the first direction, as will be described below.

Each image channel is defined by three different optically variable effect generating relief structures. The first image channel provided by the first set of image elements 100 comprises first, second and third regions 110, 120, 130, each containing a respective diffraction grating. Similarly, the second image channel provided by the second set of image elements 200 comprises first, second and third regions 210, 220, 230, each containing a respective diffraction grating, and the third image channel provided by the third set of image elements 300 comprises first, second and third regions 310, 320, 330, each containing a respective diffraction grating.

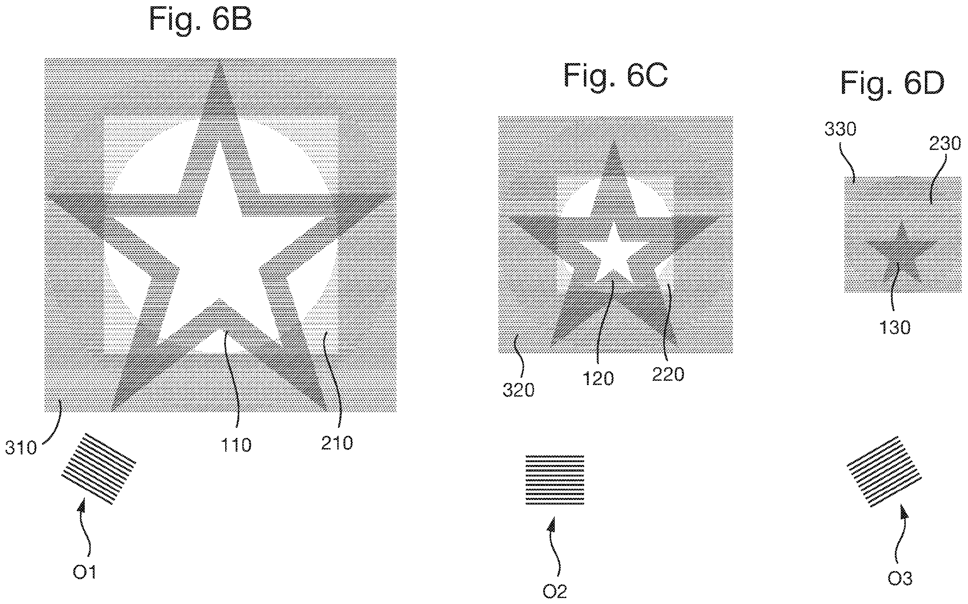

Figure 6B shows the first regions 110, 210, 310 of each set of image elements 100, 200, 300, the first regions each being disposed in accordance with the outline of a respective shape. That is, the first regions 110 of the first set of image strips 100 are disposed in accordance with the outline of a star, the first regions 210 of the second set of image strips 200 are disposed in accordance with the outline of a circle and the first regions 310 of the third set of image strips 300 are disposed in accordance with the outline of a square. These first regions each contain diffraction gratings having the same first orientation O1, such that they each exhibit a diffractive effect over substantially the same first viewing angle range in a direction of rotation about the first direction, albeit at different viewing angles in a direction of rotation about the second direction.

Figure 6C shows the second regions 120, 220, 320 of each set of image elements 100, 200, 300. These second regions are arranged to define a smaller outline of the same shape defined by the first regions, concentric with those first regions. For example, the second regions 120 of the first set of image elements 100 define an outline of a star that lies within the outline of the star defined by the first regions 110. These second regions 120, 220, 320 each contain diffraction gratings having the same second orientation 02, such that they each exhibit a diffractive effect over substantially the same second viewing angle range in a direction of rotation about the first direction. Specifically, the second regions 120, 220, 320 contain diffraction gratings that differ from those in the first regions 110, 210, 310 only in orientation.. The appearance of the security element will be described in more detail below.

Figure 6D shows the third regions 130, 230, 330 of each set of image elements 100, 200, 300. These third regions are arranged to fill in the shape outlines defined by the second regions 120, 220, 320. The third regions 130, 230, 330 each contain diffraction gratings having the same third orientation 03, such that they each exhibit a diffractive effect over substantially the same third viewing angle range in a direction of rotation about the first direction. Specifically, the third regions 130, 230, 330 contain diffraction gratings that differ from those in the first regions 110, 210, 310 and the second regions 120, 220, 320 only in orientation.

It will be noted here that the various regions comprising diffraction grating are not distributed over interlaced image areas, as with the embodiments of Figures 4 and 5. Rather the regions are distributed over a number of larger continuous areas within each strip. In particular, the second regions define a graphic within the outline of a graphic defined by the first regions, and the third regions define a graphic within the outline of a graphic defined by the second regions.

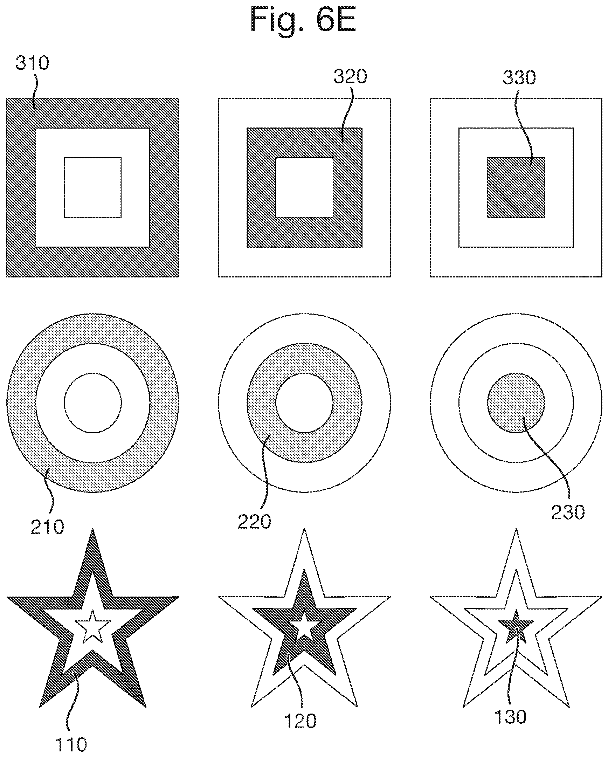

Figure 6E shows the appearance of the device at nine different viewing angles. Those views shown in the upper row of Figure 6E represent the third image channel at different viewing angles in a direction of rotation about the first direction. Those views shown in the middle row of Figure 6E represent the second image channel at different viewing angles in a direction of rotation about the first direction. Finally, those views shown in the lower row of Figure 6E represent the first image channel at different viewing angles in a direction of rotation about the first direction. As mentioned, to switch between the image channels, the security element is rotated about the second direction such that the lenses focus light from the different sets of image strips 100, 200, 300.

Those views shown in the left column of Figure 6E represent, for the third, second and first image channels from top to bottom respectively, the appearances of the security element when viewed at angles of rotation about the first direction such that the first regions 110, 210, 310 display their diffractive effects. Similarly, the middle column shows the appearances of the security element when viewed at angles of rotation about the first direction such that the second regions 120, 220, 320 display their diffractive effects and the right column shows the appearances of the security element when viewed at angles of rotation about the first direction such that the third regions 130, 230, 330 display their diffractive effects.

The final security effect produced by this security element provides for optical variation in both orthogonal directions of rotation. Specifically, rotating the security element about the second direction will change between the different image channels, such that either the star, circle or square is displayed. Rotating the security element about the first direction will cause the size of the shape displayed to change as the first, second and third regions exhibit their diffractive effects in turn.

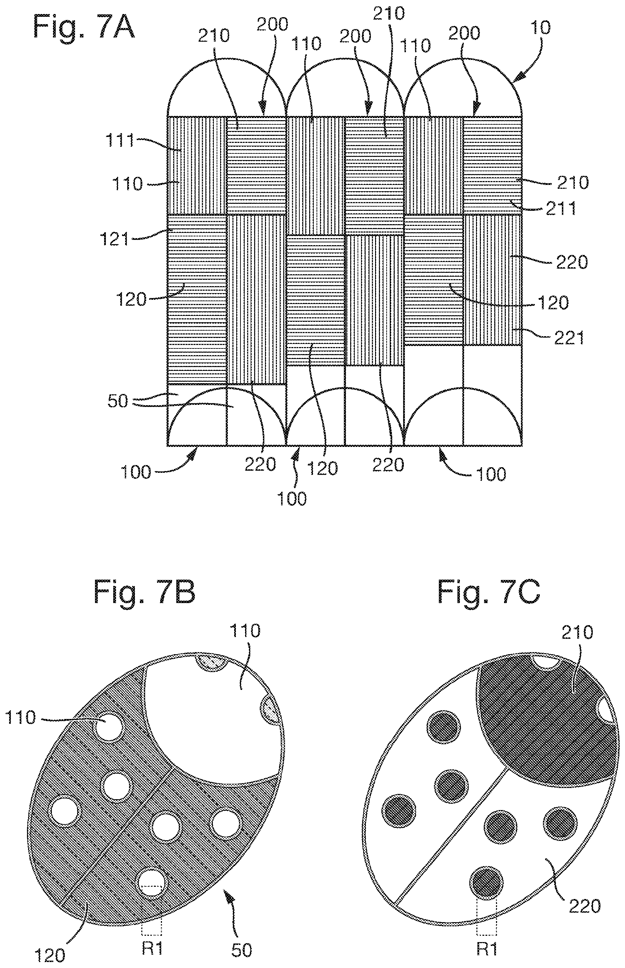

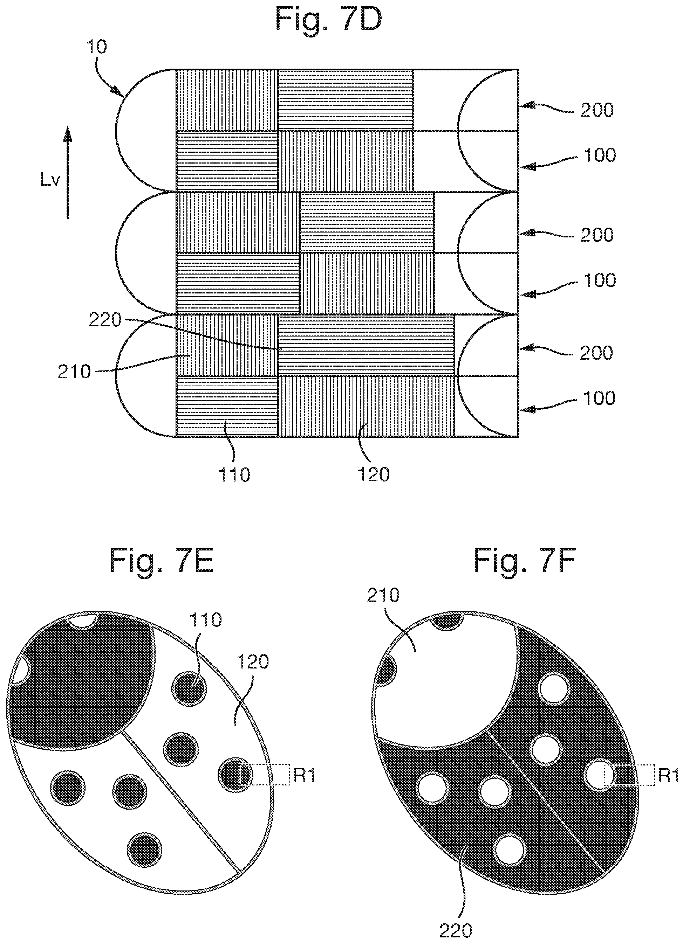

Figure 7 shows a further example security element. As shown in Figure 7A, an array of lenses 10 overlays an array of image elements comprising first and second sets of image strips 100, 200.

At least a first subset of the first set of image strips 100 comprises both a first region 110 and a second region 120. Those image strips of the first set of image strips 100 not in the first subset may comprise the first region, the second region or neither, in accordance with the image to be displayed. The first region 110 comprises a first optically variable effect generating relief structure, which is a first diffraction grating 111. This first diffraction grating has a first diffraction grating pitch and is oriented to have grating lines that extend parallel to the second direction (i.e. in the same direction as the direction of extension of the lenses). The second region 120 comprises a second optically variable effect generating relief structure, which is a second diffraction grating 121. This second diffraction grating has a second diffraction grating pitch and is oriented to have grating lines that extend parallel to the first direction (i.e. perpendicular to the direction of extension of the lenses). The first image strips also comprise background regions 50, which comprise no optically variable structure and serve to provide a background. In some embodiments, these regions 50 are provided with a light absorbing relief structure, such as a one or two-dimensional moth-eye relief structure. The first and second regions and the background regions are disposed in accordance with a graphic. Specifically, the regions are disposed in accordance with a ladybird graphic, with the first regions 110 defining the head and spots of the ladybird and the second regions 120 defining the body and eyes, as shown in Figure 7B. For reference, Figure 7A specifically shows, schematically, a small region R1 of the security element.

The second set of image strips comprise first regions 210 and second regions 220, which together with background regions 50, are arranged in substantially the same manner as the first and second regions 110, 120 of the first set of image strips 100 to define the same ladybird graphic. That is, the first regions 210 defining the head and spots of the ladybird and the second regions 220 define the body and eyes. However, whereas the first region 110 of the first set of image strips 100 comprises a grating 111 oriented to have grating lines that extend parallel to the second direction, the first region 210 of the second set of image strips 200 comprises a grating 211 oriented to have grating lines that extend perpendicular to the second direction. Similarly, whereas the second region 120 of the first set of image strips 100 comprises a grating 121 oriented to have grating lines that extend parallel to the first direction, the second region 220 of the second set of image strips 200 comprises a grating 221 oriented to have grating lines that extend perpendicular to the first direction.

Figure 7B shows the appearance of the security element when the first set of image elements 100 are viewed via the array of lenses 10 and Figure 7C shows the appearance of the security element when the second set of image elements 200 are viewed via the array of lenses 10. In both of these cases, the security element is held such that the cylindrical lenses extend in a vertical direction. Only those diffraction gratings whose elements extend perpendicular to the plane of incidence will exhibit an optically variable effect. Therefore, since the plane of incidence of light is typically vertical, only the second regions 120 of the first set of image strips 100 and the first regions 210 of the second set of image strips 200 will exhibit a distinguishable optically variable effect. In contrast, the first regions 110 of the first set of image strips 100 and the second regions 220 of the second set of image strips 200 will have a "dark", optically invariable appearance.

The result is that, when the first set of image elements 100 are viewed, a ladybird is displayed whose eyes and body change colour upon rotation of the security element about the first direction. For example, the pitch and amplitude of the grating may be configured to produce a particular colour change, such as one including red. However, when the second set of image elements 200 are viewed, a ladybird is displayed whose head and spots change colour upon rotation of the security element about the first direction.

Figure 7D shows the security element of Figure 7A, but rotated through an angle of 90° in an anti-clockwise direction such that the cylindrical lenses extend in a horizontal direction. Now, with the same vertical plane of incidence, only the first regions 110 of the first set of image strips 100 and the second regions 220 of the second set of image strips 200 will exhibit a distinguishable optically variable effect as their grating elements extend perpendicular to this plane of incidence.

A further phenomenon that affects the appearance of the security element is this configuration is the ability of a lens to suppress the diffractive colours of a diffractive optically variable effect. In the configuration of Figures 5A to 5C, the direction of diffraction lies in the plane of incidence and the lenses have no focussing power in this direction. The lenses therefore exhibit the optical variation caused by diffraction in this direction. However, in the configuration of Figures 5D to 5E, the direction of diffraction lies again in the plane of incidence, but now the lenses do have focussing power in this direction. Accordingly, the lenses act to suppress the diffraction produced by the diffraction grating as the constituent colours of the diffractive effect are made to overlap.

The resulting appearance of the security element when viewed in the orientation of Figure 7D is shown in Figures 7E and 7F. Figure 7E shows the security element when the first set of image elements 100 are viewed via the array of lenses 10 and Figure 7F shows the appearance of the security element when the second set of image elements 200 are viewed via the array of lenses 10. Rotation about the second direction switches between viewing the first set of image elements 100 and the second set of image elements 200.

As shown in Figure 7E, when the first set of image elements 100 are viewed, only the first regions 110 will be optically active, with the second regions exhibiting an achromatic or otherwise optically invariable appearance. Since the lenses suppress the diffractive colour of the diffraction grating 111, the colour of the head and spots of the ladybird does appear as bright white colour. Rotation of the security element about the first direction will cause the region to dim in appearance as the viewing angle becomes shallow with respect to the plane of the diffraction grating 111.

As shown in Figure 7F, when the second set of image elements 200 are viewed, only the second regions 220 will be optically active. Again, the colour of the body and eye defined by these regions will depend on the range of colours in the diffracted light. Further, rotation of the security element about the first direction will cause the second regions to dim in appearance as the viewing angle becomes shallow with respect to the plane of the diffraction grating 221.

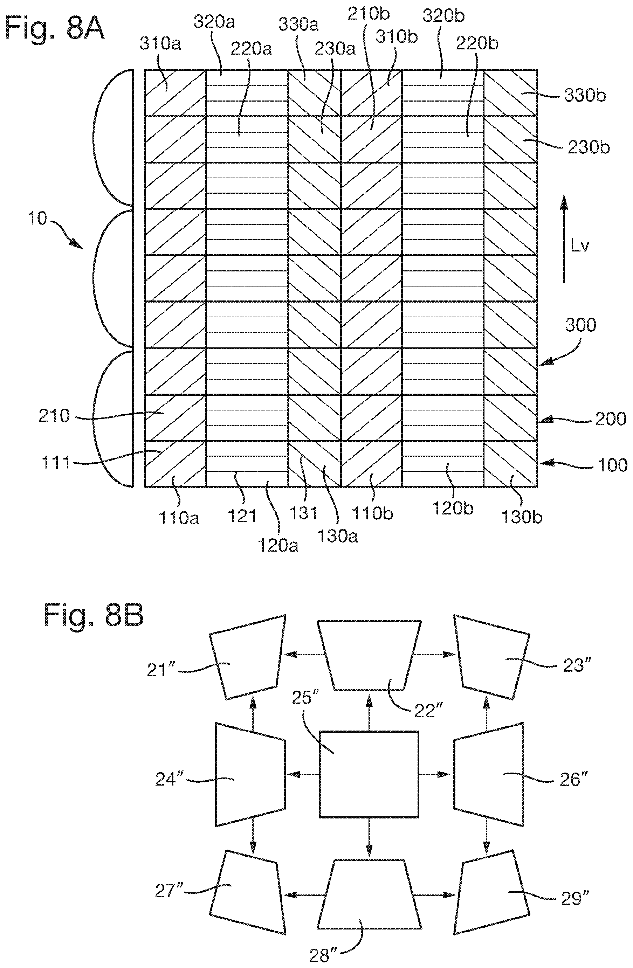

Figure 8 shows a further example of a security element and demonstrates the use of multiple sub-images provided by each set of image strips. Figure 8A shows an array of lenses 10 overlapping an array of image strips 100, 200, 300 comprising a first set of image strips 100, a second set of image strips 200 and a third set of image strips 300 interlaced along the first direction. Figure 8B shows the different views at which the security element exhibits a different image (images 21" to 29"). It should be noted here that the particular images displayed by the security element are not shown in Figure 8B, and substantially any image could be displayed.

First with reference to Figure 8B, the present security element is configured to exhibit nine images 21"-29". A first three images 21"-23" represent the images displayed by the first image channel, i.e. the first image strips 100. These three images are viewed at the same viewing angle in a direction of rotation of the security element about the second direction, but at different viewing angles in a direction of rotation about the first direction. Similarly, the second three images 24"-26" represent the images displayed by the second image channel, and are viewed at the same viewing angle in a direction of rotation of the security element about the second direction (which is different to that of the first three images), but at different viewing angles in a direction of rotation about the first direction. Finally, the three images 27"-29" represent the images displayed by the third image channel, and again, these are viewed at the same viewing angle in a direction of rotation of the security element about the second direction (different to that for the first and second channels), but at different viewing angles in a direction of rotation about the first direction.

Turning to Figure 8A, each of the first set of image strips is divided into a plurality of first image areas 110a, 110b, a plurality of second image areas 120a, 120b and a plurality of third image areas 130a, 130b. While only two of each image areas are shown in Figure 8A, it will be appreciated that many more will typically be provided per image strip. For example, the image areas will typically, individually, be indiscernible to the human eye, whereas each strip has a length that may be on the order of, for example, 1 cm in length. The first, second and third image areas 110a, 110b, 120a, 120b, 130a, 130b are interlaced along the length of the strip, i.e. they are interlaced along the second direction. The second set of image strips 200 are constructed similarly to the first set of image strips 100 and comprises first, second and third interlaced sets of image areas 210a, 210b, 220a, 220b, 230a, 230b. Finally, the third set of image strips 300 is constructed similarly to the first and second sets, comprising first, second and third interlaced sets of image areas 310a, 310b, 320a, 320b, 330a, 330b.

Focussing now on the first set of image strips to demonstrate the principal by which the different images are generated within an image channel, the first, second and third image areas are configured, as will be described in more detail below, to carry a first, second and third sub-image 21", 22", 23", respectively. In particular, the first region 110, which is the region over which the first diffraction grating 111 is provided, is distributed across these interleaved first image areas 110a, 110b in accordance with the first sub image 21". The first diffraction grating is configured, in particular by orientation of its grating lines, to exhibit an optical effect at a certain viewing angle in a direction of rotation about the first direction, which will be the viewing angle at which the first image 21 is exhibited. Specifically, the diffraction grating has an orientation such that the grating lines are rotated only slightly away from perpendicular (e.g. in an anti-clockwise direction) with the first direction such that the optical effect is suppressed by the lenses 10. The first region may not be present in every first image area and/or may not be present across the entire of the first image areas in which it is disposed. Furthermore, the first diffraction grating may not be the only diffraction grating distributed across the first image areas; in some embodiments a further diffraction grating is also provided across the first image areas, that diffraction grating also being configured, e.g. by having the same grating line orientation, to exhibit an optical effect at the same viewing angle as the first diffraction grating 111.

As an example, the first image areas 110a, 110b may be considered pixels of the first sub-image 21". The first region, i.e. the first diffraction grating 111 may be provided in a certain set of the first image areas to define, for example, "bright" pixels, and not provided in the remaining first image areas to define "dark" pixels. At the appropriate viewing angle for viewing the first sub-image 21, those first image areas within a first image strip 100 containing the first diffraction grating 111 will be bright, defining an array of bright pixels along the length of the strip. Each of the first set of image strips 100 may define their own bright pixels along their respective lengths such that a first sub-image is built up across the security element.

In a similar fashion, a second region 120, which is the region over which the second diffraction grating 121 extends, is distributed over the second image areas 120a, 120b in accordance with a second sub-image 22". In this case, the second diffraction grating is oriented with grating lines that extend perpendicular to the first direction, such that any diffractive colours are suppressed, and such that the grating is visible when the security element is viewed perpendicular to the second direction. Again, when the first image strips 100 are viewed at the appropriate viewing angle, the diffraction gratings 121 will exhibit their optical effect, appearing as bright regions. The second region may be distributed in accordance with a completely different image to that of the first region such that rotation of the security element about the first direction switches between the different first and second sub-images 21", 22".

Finally, a third region 130 having a third diffraction grating 131 is distributed over the third image areas 130a, 130b. The third diffraction grating has an orientation such that an optical effect is exhibited at a viewing angle in a direction of rotation about the first direction that is different from the first and second diffraction gratings 111, 121. In particular, third diffraction grating 131 has grating lines that are rotated only slightly away from perpendicular with the first direction (e.g. this time in a clockwise direction) such that the optical effect is suppressed by the lenses 10. When the first image strips 100 are viewed at the appropriate viewing angle, the diffraction gratings 131 will exhibit their optical effect, appearing as bright regions. The third region may be distributed in accordance with a completely different image to that of the first or second regions such that rotation of the security element about the first direction switches between the different first, second and third sub-images 21", 22", 23".

The second and third sets of image strips 200, 300 are similarly structured with different regions of diffraction gratings distributed over the first, second and third image areas of these strips. The same orientations of the diffraction gratings may be used to achieve the different sub-images being visible at the same viewing angles in a direction of rotation about the first direction, while the sampling effect provided by the array of lenses 10 dictates which image channel, i.e. which set of image strips 100, 200, 300 is visible at any one viewing angle in a direction of rotation of the security element about the second direction. The result is a security element which exhibits image switches in both orthogonal directions of tilt, with a total of nine different images being visible.

In particularly preferable implementations of the above embodiment, the nine different sub-images may be configured to present nine different views of the same object. Particularly preferably, the different views of the object are views offset from each other by angles corresponding to the angles of rotation of the security element between the different views.

The above embodiment utilises diffraction gratings that have grating lines extending generally along the length of the image strip, which have their diffractive colours suppressed by the mechanisms described above. In other embodiments, the security element could be configured for viewing with the lenses arranged to extend vertically and with grating lines extending generally along the first direction such that the diffractive colours are preserved. In such cases, the same principle of image areas may be used to provide different sub-images. However, in these embodiments, orientation is less effective as a means of controlling a gratings replay angle in a direction of rotation about the first direction. In such cases, the pitch and grating element profile may instead be configured to better control the angle at which the diffractive effect is observed and to provide different sub-images visible at different viewing angles. As mentioned, in such embodiments, diffractive colours produced by the gratings will be preserved and so the resulting sub-images for any one image channel may differ in their colour appearance to provide the security element with a striking transition upon rotation of the security element about the first direction.

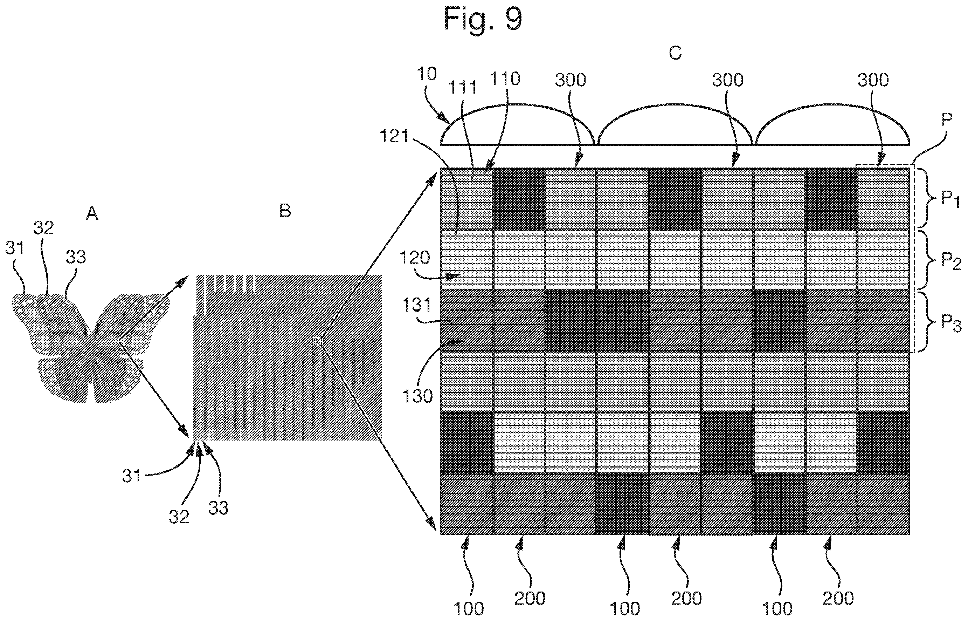

A comparative example security element is shown in Figure 9. Figure 9A shows an interlaced image design composed of three different images 31, 32, 33. Here, there are three different image channels provided by three sets of interlaced image strips 100, 200, 300, with the first set of image strips 100, providing the first image 31, the second set of image strips 200 providing the second image 32 and the third set of image strips 300 providing the third image 33. The images 31, 32, 33 provided by the image channels are images of a butterfly, with the different channels showing the wings of the butterfly in different positions such that an animation effect is produced upon rotation of the security element about the second direction, as the lenses sample the different sets of image strips. Figure 9B shows an enlarged view of a portion of the interlaced design, showing in more detail the interlaced image strips. Figure 9C shows a yet further enlarged portion of the interlaced design, here showing the different diffraction gratings within each image strip.

Each image strip of the sets of image strips 100, 200, 300 is divided into areas along the length of the strip corresponding to pixels of the final image P. Each of these areas P is divided into three equally sized sub-areas P₁, P₂, P₃. The first region 110, which is the region over which the first diffraction grating 111 is provided, is distributed across the pixels P in the sub-areas. For example, where the image 31 dictates that, for a particular pixel P, a red component of the image is required, the pixel P is provided in one of the sub-areas P₁ with the first diffraction grating 111, which produces a red diffractive effect. On the other hand, where the image 31 dictates that, for a particular pixel, no red component of the image is required, the corresponding pixel P is not provided with the diffraction grating 111. Similarly, for each pixel, second and third diffraction gratings 121, 131, which produce green and blue diffractive colour effects, are selectively provided in the second and third sub-areas P₂, P₃ to build up a full colour version of the image 31 across the image strips 100. The same principal is applied to the second and third sets of image strips for constructing the second and third images 32, 33.

Each of the diffraction gratings provided across the sets of image strips 100, 200, 300 is oriented to have grating lines that extend substantially parallel with the first direction such that the array of lenses do not suppress the diffractive colours generated by the gratings. Accordingly, when each of the sets of image strips 100, 200, 300 are viewed through the lenses 10, the diffractive colours of each grating are visible, such that a multi-coloured image is displayed. Rotation of the security element about the first direction will cause the diffractive colours exhibited by the gratings to change. The precise colour change exhibited will depend upon the various properties of the diffraction grating, such as pitch and amplitude.

Producing the above security elements will typically comprise forming the array of lenses using well known methods of embossing or cast-curing a lens relief structure into a clear layer of a suitable material. Examples of methods of forming an array of lenses may be found in WO 2017/009616 A1.

The optically variable effect generating relief structures may be formed using known methods such as e-beam lithography to write the desired structure into a layer of resist material. Other means of forming the optically variable effect generating relief structures include laser photolithography. Examples of methods of forming diffractive relief structures may be found in Optical Document Security by Rudolf L. Van Renesse, 2^{nd} edition. The diffractive relief structures may also be metallised or partially metallised, such as by vacuum deposition, to improve their optical characteristics.

Security elements of the sorts described above are suitable for forming on security articles such as threads, stripes, patches, foils and the like which can then be incorporated into or applied onto security documents such as banknotes. The security elements can also be constructed directly on security documents which are formed of a transparent document substrate, such as polymer banknotes. In such cases, the array of image strips may be formed in a first substrate, e.g. using e-beam lithography or photolithography, and then transferred onto or affixed to one surface of the document substrate, optionally using a transparent adhesive. Alternatively, the array of image strips could be formed directly on the document substrate by forming the relief structure in the polymeric material providing the document substrate. A focusing element array can be applied over the image strips, either on the same side or the opposite side of document substrate, e.g. by transfer, embossing or cast-curing, before or after the image strips are provided.

Security elements of the sorts described above can be incorporated into or applied to any product for which an authenticity check is desirable. In particular, such devices may be applied to or incorporated into documents of value such as banknotes, passports, driving licences, cheques, identification cards etc. The security element can either be formed directly on the security document (e.g. on a polymer substrate forming the basis of the security document) or may be supplied as part of a security article, such as a security thread or patch, which can then be applied to or incorporated into such a document.

Such security articles can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP 0059056 A1. EP 0860298 A2 and WO 03095188 A2 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

The security article may be incorporated into a paper or polymer base substrate so that it is viewable from both sides of the finished security substrate at at least one window of the document. Methods of incorporating security elements in such a manner are described in EP 1141480 A1 and WO 03054297 A2. In the method described in EP 1141480 A1, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer.

Techniques are known in the art for forming substantially transparent regions in each of these types of substrate. For example, WO 8300659 A1 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security element or a separate security element can be applied to the transparent substrate of the document. WO 0039391 A1 describes a method of making a transparent region in a paper substrate.

The security element may also be applied to one side of a paper substrate, optionally so that portions are located in an aperture formed in the paper substrate. An example of a method of producing such an aperture can be found in WO 03054297 A2. An alternative method of incorporating a security element which is visible in apertures in one side of a paper substrate and wholly exposed on the other side of the paper substrate can be found in WO 2000/39391 A1.

The security element of the current invention can be made machine readable by the introduction of detectable materials in any of the layers or by the introduction of separate machine-readable layers. Detectable materials that react to an external stimulus include but are not limited to fluorescent, phosphorescent, infrared absorbing, thermochromic, photochromic, magnetic, electrochromic, conductive and piezochromic materials.

Additional optically variable devices or materials can be included in the security element such as thin film interference elements, liquid crystal material and photonic crystal materials. Such materials may be in the form of filmic layers or as pigmented materials suitable for application by printing. If these materials are transparent they may be included in the same region of the device as the security feature of the current invention or alternatively and if they are opaque may be positioned in a separate laterally spaced region of the device.

Particularly in embodiments in which the optically variable effect generating relief structures are metallised, e.g. in which the diffraction gratings are coated in a metal layer, the security element can be used to conceal the presence of a machine readable dark magnetic layer. When a magnetic material is incorporated into the device the magnetic material can be applied in any design but common examples include the use of magnetic tramlines or the use of magnetic blocks to form a coded structure. Suitable magnetic materials include iron oxide pigments (Fe₂O₃ or Fe₃O₄), barium or strontium ferrites, iron, nickel, cobalt and alloys of these. In this context the term "alloy" includes materials such as Nickel:Cobalt, Iron:Aluminium:Nickel:Cobalt and the like. Flake Nickel materials can be used; in addition Iron flake materials are suitable. Typical nickel flakes have lateral dimensions in the range 5-50 microns and a thickness less than 2 microns. Typical iron flakes have lateral dimensions in the range 10-30 microns and a thickness less than 2 microns.

In an alternative machine-readable embodiment a transparent magnetic layer can be incorporated at any position within the device structure. Suitable transparent magnetic layers containing a distribution of particles of a magnetic material of a size and distributed in a concentration at which the magnetic layer remains transparent are described in WO 03091953 A2 and WO 03091952 A2.

## Claims

1. A security element comprising:
an array of focussing elements (10) defining a focussing element plane, each focussing element being adapted to focus light only in a first direction, the focussing elements being arranged in a regular array along the first direction (Lv);
an array of image strips (100, 200, 300) overlapping the array of focussing elements (10), the array of image strips (100, 200, 300) comprising at least a first set of image strips (100) and a second set of image strips (200), wherein the first and second sets of image strips (100, 200) are interlaced along the first direction (Lv), and wherein the first and second sets of image strips each have a periodicity along the first direction that is substantially the same as, or an integral multiple of, a periodicity of the array of focussing elements (10);
wherein the array of focussing elements (10) and the array of image strips (100, 200, 300) are arranged such that as the security element is rotated about a second direction, the second direction being the direction perpendicular to the first direction (Lv) and within the focussing element plane, the first set of image strips (100) is displayed via the array of focussing elements at a first viewing angle and the second set of image strips (200) is displayed via the array of focussing elements at a second viewing angle;
wherein each of at least a first subset of the image strips of the first set of image strips comprises a first region (110) having a first optically variable effect generating relief structure (111) and a second region (120) having a second optically variable effect generating relief structure (121), wherein the first optically variable effect generating relief structure differs from the second optically variable effect generating relief structure in at least one of the pitch of the relief structure, the orientation of the relief structure and the size, shape and/or profile of the elements of the relief structure such that the appearances of the first and second regions (110, 120) vary differently as the security element is rotated about the first direction (Lv), wherein each image strip of the first subset of the first set of image strips comprises a plurality of first image areas and a plurality of second image areas, the first image areas and the second image areas being interlaced with one another along each image strip of the first subset of the first set of image strips, and wherein the first region of each image strip of the first subset of the first set of image strips is distributed over the first image areas and wherein the second region of each image strip of the first subset of the first set of image strips is distributed over the second image areas, wherein each of the first set of image strips carries a respective portion of a first optically variable image, the first optically variable image comprising at least first and second sub-images, wherein the first region of each image strip of the first subset of the first set of image strips is spatially arranged across the first image areas in accordance with image information of the first sub-image and wherein the second region of each image strip of the first subset of the first set of image strips is spatially arranged across the second image areas in accordance with image information of the second sub-image, wherein the optically variable effect generating relief structure of each first region is configured such that, as the security element is rotated about the first direction, the first regions exhibit a first optically variable effect over a first viewing angle range, thereby displaying the first sub-image and wherein the second optically variable effect generating relief structure of each second region is configured such that, as the security element is rotated about the first direction, the second regions exhibit a second optically variable effect over a second viewing angle range different from the first viewing angle range, thereby displaying the second sub-image.

2. A security element according to any of the preceding claims, wherein the orientation of the first optically variable effect generating relief structure differs from the orientation of the second optically variable effect generating relief structure such that, as the security element is rotated about the first direction, the first region exhibits the first optically variable effect over the first viewing angle range and the second region exhibits the second optically variable effect over the second viewing angle range, and/or wherein the first optically variable effect generating relief structure differs from the second optically variable effect generating relief structure in at least one of the pitch of the relief structure and the size, shape and/or profile of the elements of the relief structure such that, as the security element is rotated about the first direction, the first region exhibits the first optically variable effect over the first viewing angle range and the second region exhibits the second optically variable effect over the second viewing angle range, and wherein preferably the first viewing angle range substantially does not overlap the second viewing angle range.

3. A security element according to any of the preceding claims, wherein the first optically variable effect generating relief structure differs from the second optically variable effect generating relief structure in at least one of the pitch of the relief structure, the orientation of the relief structure and the size, shape and/or profile of the elements of the relief structure such that, as the security element is rotated about the first direction, the first region exhibits the first optically variable effect and the second region exhibits the second optically variable effect, the second optically variable effect being different from the first optically variable effect.

4. A security element according to any of the preceding claims,, wherein the first viewing angle range and the second viewing angle range substantially do not overlap such that an image switch effect between the first sub-image and the second sub-image is exhibited by the first and second regions upon rotation of the security element about the first direction.

5. A security element according to any of the preceding claims, wherein the first regions are first colour component regions of the first sub-image, wherein the first optically variable effect generating relief structure is configured to exhibit a first diffractive colour effect over a first viewing angle range as the security element is rotated about the first direction, and wherein the first image areas additionally comprise second colour component regions of the first sub-image, the second colour component regions having an optically variable effect generating relief structure configured to exhibit a second diffractive colour effect over the first viewing angle range, the first and second colour component regions being arranged to provide first and second colour components of the first sub-image, wherein preferably the first image areas additionally comprise third colour component regions of the first sub-image, the third colour component regions having an optically variable effect generating relief structure configured to exhibit a third diffractive colour effect over the first viewing angle range, the third colour component regions being arranged to provide a third colour component of the first sub-image.

6. A security element according to any of the preceding claims, wherein each of a first subset of the second set of image strips comprises a third region having a third optically variable effect generating relief structure, wherein preferably each of the second set of image strips carries a respective portion of a second optically variable image, and wherein the third region is spatially arranged in accordance with image information of the second optically variable image and/or wherein each of the first subset of the second set of image strips comprises a fourth region having a fourth optically variable effect generating relief structure, wherein the third optically variable effect generating relief structure differs from the fourth optically variable effect generating relief structure in at least one of the pitch of the relief structure, the orientation of the relief structure and the size, shape and profile of the elements of the relief structure such that the appearances of the third and fourth regions vary differently as the security element is rotated about the first direction.

7. A security element according to any of the preceding claims, wherein one or more of the optically variable effect generating relief structures comprise a diffractive relief structure, such as a diffraction grating, for generating an optically variable effect that is a diffractive optical effect.

8. A security element according to any of the preceding claims, wherein the first region comprises a first diffraction grating having a first orientation and the second region comprises a second diffraction grating having a second orientation different from the first orientation.

9. A security element according to any of the preceding claims, wherein the array of image strips further comprises a third set of image strips, wherein the first, second and third sets of image strips are interlaced along the first direction, and wherein the first, second and third sets of image strips each have a periodicity along the first direction that is substantially the same as, or an integral multiple of, a periodicity of the array of focussing elements, wherein preferably each of a first subset of the third set of image strips comprises a fifth region having a fifth optically variable effect generating relief structure.

10. A security element according to any of the preceding claims, wherein one or more of the optically variable effect generating relief structures comprises a diffraction grating for generating an optically variable effect that is a diffractive optical effect, the diffraction grating comprising grating elements that are oriented at an angle of at most 45° to the first direction, preferably at most 20° to the first direction, more preferably at most 10° to the first direction, such that the diffractive colours of the diffractive optical effect are displayed via the focussing elements.

11. A security element according to any of the preceding claims, wherein the first set of image strips further comprise one or more additional regions not comprising an optically variable effect generating relief structure, and preferably wherein the one or more additional regions comprise a light absorbing relief structure.

12. A method of forming a security element comprising:
providing an array of focussing elements (10) defining a focussing element plane, each focussing element being adapted to focus light only in a first direction, the focussing elements being arranged in a regular array along the first direction (Lv);
providing an array of image strips (100, 200, 300) overlapping the array of focussing elements, the array of image strips comprising at least a first set of image strips (100) and a second set of image strips (200), wherein the first and second sets of image strips are interlaced along the first direction (Lv), and wherein the first and second sets of image strips each have a periodicity along the first direction that is substantially the same as, or an integral multiple of, a periodicity of the array of focussing elements (10);
wherein the array of focussing elements (10) and the array of image (100, 200, 300) strips are arranged such that as the security element is rotated about a second direction, the second direction being the direction perpendicular to the first direction (Lv) and within the focussing element plane, the first set of image strips (100) is displayed via the array of focussing elements (10) at a first viewing angle and the second set of image strips (200) is displayed via the array of focussing elements (10) at a second viewing angle;
wherein each of at least a first subset of the image strips of the first set of image strips comprises a first region (110) having a first optically variable effect generating relief structure (111) and a second region (120) having a second optically variable effect generating relief structure (121), wherein the first optically variable effect generating relief structure differs from the second optically variable effect generating relief structure in at least one of the pitch of the relief structure, the orientation of the relief structure and the size, shape and/or profile of the elements of the relief structure such that the appearances of the first and second regions vary differently as the security element is rotated about the first direction (Lv), wherein each image strip of the first subset of the first set of image strips comprises a plurality of first image areas and a plurality of second image areas, the first image areas and the second image areas being interlaced with one another along each image strip of the first subset of the first set of image strips, and wherein the first region of each image strip of the first subset of the first set of image strips is distributed over the first image areas and wherein the second region of each image strip of the first subset of the first set of image strips is distributed over the second image areas, wherein each of the first set of image strips carries a respective portion of a first optically variable image, the first optically variable image comprising at least first and second sub-images, wherein the first region of each image strip of the first subset of the first set of image strips is spatially arranged across the first image areas in accordance with image information of the first sub-image and wherein the second region of each image strip of the first subset of the first set of image strips is spatially arranged across the second image areas in accordance with image information of the second sub-image, wherein the optically variable effect generating relief structure of each first region is configured such that, as the security element is rotated about the first direction, the first regions exhibit a first optically variable effect over a first viewing angle range, thereby displaying the first sub-image and wherein the second optically variable effect generating relief structure of each second region is configured such that, as the security element is rotated about the first direction, the second regions exhibit a second optically variable effect over a second viewing angle range different from the first viewing angle range, thereby displaying the second sub-image.

13. A security element comprising:
an array of focussing elements (10) defining a focussing element plane, each focussing element being adapted to focus light only in a first direction, the focussing elements being arranged in a regular array along the first direction (Lv);
an array of image strips (100, 200, 300) overlapping the array of focussing elements (10), the array of image strips (100, 200, 300) comprising at least a first set of image strips (100) and a second set of image strips (200), wherein the first and second sets of image strips (100, 200) are interlaced along the first direction (Lv), and wherein the first and second sets of image strips each have a periodicity along the first direction that is substantially the same as, or an integral multiple of, a periodicity of the array of focussing elements (10);
wherein the array of focussing elements (10) and the array of image strips (100, 200, 300) are arranged such that as the security element is rotated about a second direction, the second direction being the direction perpendicular to the first direction (Lv) and within the focussing element plane, the first set of image strips (100) is displayed via the array of focussing elements at a first viewing angle and the second set of image strips (200) is displayed via the array of focussing elements at a second viewing angle;
wherein each of at least a first subset of the image strips of the first set of image strips comprises a first region (110) having a first diffractive relief structure (111) for generating an optically variable effect that is a diffractive optical effect and a second region (120) having a second diffractive relief structure (121) for generating an optically variable effect that is a diffractive optical effect, wherein the first diffractive relief structure differs from the second diffractive relief structure in at least one of the pitch of the relief structure, the orientation of the relief structure and the size, shape and/or profile of the elements of the relief structure such that the appearances of the first and second regions (110, 120) vary differently as the security element is rotated about the first direction (Lv);
wherein each of the first set of image strips carries a respective portion of a first optically variable image, and wherein the first and second regions of the first subset of the first set of image strips are spatially arranged in accordance with image information of the first optically variable image, and wherein the first diffractive relief structure differs from the second diffractive relief structure in at least one of the pitch of the relief structure, the orientation of the relief structure and the size, shape and/or profile of the elements of the relief structure such that, as the security element is rotated about the first direction, the first region exhibits a first optically variable effect over a first viewing angle range and the second region exhibits a second optically variable effect over a second viewing angle range different from the first viewing angle range.

14. A method of forming a security element comprising:
providing an array of focussing elements (10) defining a focussing element plane, each focussing element being adapted to focus light only in a first direction, the focussing elements being arranged in a regular array along the first direction (Lv);
providing an array of image strips (100, 200, 300) overlapping the array of focussing elements, the array of image strips comprising at least a first set of image strips (100) and a second set of image strips (200), wherein the first and second sets of image strips are interlaced along the first direction (Lv), and wherein the first and second sets of image strips each have a periodicity along the first direction that is substantially the same as, or an integral multiple of, a periodicity of the array of focussing elements (10);
wherein the array of focussing elements (10) and the array of image (100, 200, 300) strips are arranged such that as the security element is rotated about a second direction, the second direction being the direction perpendicular to the first direction (Lv) and within the focussing element plane, the first set of image strips (100) is displayed via the array of focussing elements (10) at a first viewing angle and the second set of image strips (200) is displayed via the array of focussing elements (10) at a second viewing angle;
wherein each of at least a first subset of the image strips of the first set of image strips comprises a first region (110) having a first diffractive relief structure (111) for generating an optically variable effect that is a diffractive optical effect and a second region (120) having a second diffractive relief structure (121) for generating an optically variable effect that is a diffractive optical effect, wherein the first diffractive relief structure differs from the second diffractive relief structure in at least one of the pitch of the relief structure, the orientation of the relief structure and the size, shape and/or profile of the elements of the relief structure such that the appearances of the first and second regions vary differently as the security element is rotated about the first direction (Lv);
wherein each of the first set of image strips carries a respective portion of a first optically variable image, and wherein the first and second regions of the first subset of the first set of image strips are spatially arranged in accordance with image information of the first optically variable image, and wherein the first diffractive relief structure differs from the second diffractive relief structure in at least one of the pitch of the relief structure, the orientation of the relief structure and the size, shape and/or profile of the elements of the relief structure such that, as the security element is rotated about the first direction, the first region exhibits a first optically variable effect over a first viewing angle range and the second region exhibits a second optically variable effect over a second viewing angle range different from the first viewing angle range.

## Patentansprüche

1. Sicherheitselement, umfassend:
Eine Anordnung von Fokussierelementen (10), die eine Fokussierelementebene definieren, wobei jedes Fokussierelement angepasst ist, Licht nur in eine erste Richtung zu fokussieren, wobei die Fokussierelemente in einer regelmäßigen Anordnung entlang der ersten Richtung (Lv) angeordnet sind;
eine Anordnung von Bildstreifen (100, 200, 300), welche die Anordnung von Fokussierelementen (10) überlappen, wobei die Anordnung von Bildstreifen (100, 200, 300) zumindest einen ersten Satz von Bildstreifen (100) und einen zweiten Satz von Bildstreifen (200) umfasst, wobei die ersten und zweiten Sätze von Bildstreifen (100, 200) entlang der ersten Richtung (Lv) verschachtelt sind, und wobei die ersten und zweiten Sätze von Bildstreifen jeweils eine Periodizität entlang der ersten Richtung aufweisen, welche wesentlich dieselbe wie oder ein integrales Vielfaches, eine(r) Periodizität der Anordnung von Fokussierelementen (10) ist;
wobei die Anordnung von Fokussierelementen (10) und die Anordnung von Bildstreifen (100, 200, 300) derart angeordnet sind, dass, während das Sicherheitselement um eine zweite Richtung rotiert wird, die zweite Richtung die Richtung senkrecht zur ersten Richtung (Lv) und innerhalb der Fokussierelementebene ist, wobei der erste Satz von Bildstreifen (100) via die Anordnung von Fokussierelementen in einem ersten Betrachtungswinkel angezeigt wird und der zweite Satz von Bildstreifen (200) via die Anordnung von Fokussierelementen in einem zweiten Betrachtungswinkel angezeigt wird;
wobei jeder von zumindest einem Teilsatz der Bildstreifen des ersten Satzes von Bildstreifen einen ersten Bereich (110), der eine erste Reliefstruktur (111) aufweist, die einen ersten optisch variablen Effekt generiert, und einen zweiten Bereich (120) umfasst, der eine zweite Reliefstruktur (121) aufweist, die einen zweiten optischen Effekt generiert, wobei sich die erste optisch variablen Effekt generierende Reliefstruktur von der zweiten optisch variablen Effekt generierenden Reliefstruktur in mindestens einem, nämlich der Neigung der Reliefstruktur, der Orientierung der Reliefstruktur und der Größe, Form und/oder des Profils der Elemente der Reliefstruktur derart unterscheidet, dass die Erscheinungsbilder der ersten und zweiten Bereiche (110, 120) verschieden variieren, während das Sicherheitselement um die erste Richtung (Lv) gedreht wird, wobei jeder Bildstreifen des ersten Teilsatzes des ersten Satzes von Bildstreifen eine Vielzahl von ersten Bildbereichen und eine Vielzahl von zweiten Bildbereichen umfasst, wobei die ersten Bildbereiche und die zweiten Bildbereiche entlang jedes Bildstreifens des ersten Teilsatzes des ersten Satzes von Bildstreifen miteinander verschachtelt sind, und wobei der erste Bereich jedes Bildstreifens des ersten Teilsatzes des ersten Satzes von Bildstreifen über die ersten Bildbereiche verteilt ist und wobei der zweite Bereich jedes Bildstreifens des ersten Teilsatzes des ersten Satzes von Bildstreifen über die zweiten Bildbereiche verteilt ist, wobei jeder des ersten Satzes von Bildstreifen einen jeweiligen Abschnitt eines ersten optisch variablen Bildes trägt, wobei das erste optisch variable Bild mindestens erste und zweite Unterbilder umfasst, wobei der erste Bereich jedes Bildstreifens des ersten Teilsatzes des ersten Satzes von Bildstreifen entsprechend den Bildinformationen des ersten Unterbildes räumlich über die ersten Bildbereiche angeordnet ist und wobei der zweite Bereich jedes Bildstreifens des ersten Teilsatzes des ersten Satzes von Bildstreifen entsprechend den Bildinformationen des zweiten Unterbildes räumlich über die zweiten Bildbereiche angeordnet ist, wobei die den optisch variablen Effekt erzeugende Reliefstruktur jedes ersten Bereichs so konfiguriert ist, dass die ersten Bereiche beim Drehen des Sicherheitselements um die erste Richtung einen ersten optisch variablen Effekt über einen ersten Betrachtungswinkelbereich aufweisen und dadurch das erste Unterbild anzeigen, und wobei die den zweiten optisch variablen Effekt erzeugende Reliefstruktur jedes zweiten Bereichs so konfiguriert ist, dass die zweiten Bereiche beim Drehen des Sicherheitselements um die erste Richtung einen zweiten optisch variablen Effekt über einen zweiten Betrachtungswinkelbereich aufweisen, der sich vom ersten Betrachtungswinkelbereich unterscheidet, und dadurch das zweite Unterbild anzeigen.

2. Sicherheitselement nach irgendeinem vorhergehenden Anspruch, wobei sich die Orientierung, der ersten optisch variablen Effekt generierenden Reliefstruktur von der Orientierung der zweiten optisch variablen Effekt generierenden Reliefstruktur derart unterscheidet, dass, während das Sicherheitselement um die erste Richtung gedreht wird, der erste Bereich den ersten optisch variablen Effekt über den ersten Betrachtungswinkelbereich zeigt und der zweite Bereich den zweiten optisch variablen Effekt über den zweiten Betrachtungswinkelbereich zeigt, und/oder wobei sich die erste optisch variablen Effekt generierende Reliefstruktur von der zweiten optisch variablen Effekt generierenden Reliefstruktur in zumindest einem, nämlich der Neigung der Reliefstruktur und der Größe, Form und/oder des Profils der Elemente der Reliefstruktur derart unterscheidet, dass, während das Sicherheitselement um die erste Richtung gedreht wird, der erste Bereich den ersten optisch variablen Effekt über den ersten Betrachtungswinkelbereich zeigt und der zweite Bereich den zweiten optisch variablen Effekt über den zweiten Betrachtungswinkelbereich zeigt, und wobei vorzugsweise der erste Betrachtungswinkelbereich den zweiten Betrachtungswinkelbereich wesentlich nicht überlappt.

3. Sicherheitselement nach irgendeinem der vorhergehenden Ansprüche, wobei sich die erste optisch variablen Effekt generierende Reliefstruktur von der zweiten optisch variablen Effekt generierenden Reliefstruktur in zumindest einem, nämlich der Neigung der Reliefstruktur, der Orientierung der Reliefstruktur und der Größe, Form und oder des Profils der Elemente der Reliefstruktur derart unterscheidet, dass, während das Sicherheitselement um die erste Richtung gedreht wird, der erste Bereich den ersten optisch variablen Effekt zeigt und der zweite Bereich den zweiten optisch variablen Effekt zeigt, wobei der zweite optisch variable Effekt verschieden vom ersten optisch variablen Effekt ist.

4. Sicherheitselement nach irgendeinem der vorhergehenden Ansprüche, wobei sich der erste Betrachtungswinkelbereich und der zweite Betrachtungswinkelbereich wesentlich derart nicht überlappen, dass ein Bildschalteffekt zwischen dem ersten Unterbild und dem zweiten Unterbild durch die ersten und zweiten Bereiche, nach Drehung des Sicherheitselements um die erste Richtung, gezeigt wird.

5. Sicherheitselement nach irgendeinem der vorhergehenden Ansprüche, wobei die ersten Bereiche erste Farbkomponentenbereiche des ersten Unterbildes sind, wobei die erste optisch variablen Effekt generierende Reliefstruktur konfiguriert ist, einen ersten beugenden Farbeffekt über einen ersten Betrachtungswinkelbereich zu zeigen, während das Sicherheitselement um die erste Richtung gedreht wird, und wobei die ersten Bildflächen zusätzlich zweite Farbkomponentenbereiche des ersten Unterbildes umfassen, wobei die zweiten Farbkomponentenbereiche eine optisch variablen Effekt generierende Reliefstruktur aufweisen, die konfiguriert ist, einen zweiten beugenden Farbeffekt über den ersten Betrachtungswinkelbereich zu zeigen, wobei die ersten und zweiten Farbkomponentenbereiche angeordnet sind, erste und zweite Farbkomponenten des ersten Unterbildes bereitzustellen, wobei vorzugsweise die ersten Bildflächen zusätzlich dritte Farbkomponentenbereiche des ersten Unterbildes umfassen, wobei die dritten Farbkomponentenbereiche eine optisch variablen Effekt generierende Reliefstruktur aufweisen, die konfiguriert ist, einen dritten beugenden Farbeffekt über den ersten Betrachtungswinkelbereich zu zeigen, wobei die dritten Farbkomponentenbereiche angeordnet sind, eine dritte Farbkomponente des ersten Unterbildes bereitzustellen.

6. Sicherheitselement nach irgendeinem der vorhergehenden Ansprüche, wobei jeder eines ersten Teilsatzes des zweiten Satzes von Bildstreifen einen dritten Bereich umfasst, der eine dritte optisch variablen Effekt generierende Reliefstruktur aufweist, wobei vorzugsweise jeder des zweiten Satzes von Bildstreifen einen jeweiligen Teil eines zweiten optisch variablen Bildes trägt, und wobei der dritte Bereich räumlich in Übereinstimmung mit Bildinformation des zweiten optisch variablen Bildes angeordnet ist, und/oder wobei des ersten Teilsatzes des zweiten Satzes von Bildstreifen einen vierten Bereich umfasst, der eine vierte optisch variablen Effekt generierende Reliefstruktur aufweist, wobei sich die dritte optisch variablen Effekt generierende Reliefstruktur von der vierten optisch variablen Effekt generierenden Reliefstruktur in zumindest einem, nämlich der Neigung der Reliefstruktur, der Orientierung der Reliefstruktur und der Größe, Form und des Profils der Elemente der Reliefstruktur derart unterscheidet, dass die Erscheinungsbilder der dritten und vierten Bereiche verschieden variieren, während das Sicherheitselement um die erste Richtung rotiert wird.

7. Sicherheitselement nach irgendeinem der vorhergehenden Ansprüche, wobei ein oder mehrere der optisch variablen Effekt generierenden Reliefstrukturen eine beugende Reliefstruktur, wie beispielsweise ein Beugungsgitter, zum Generieren eines optisch variablen Effekts umfassen, der ein beugender optischer Effekt ist.

8. Sicherheitselement nach irgendeinem der vorhergehenden Ansprüche, wobei der erste Bereich ein erstes Beugungsgitter mit einer ersten Orientierung umfasst und der zweite Bereich ein zweites Beugungsgitter mit einer zweiten Orientierung umfasst, die von der ersten Orientierung verschieden ist.

9. Sicherheitselement nach irgendeinem der vorhergehenden Ansprüche, wobei die Anordnung von Bildstreifen ferner einen dritten Satz von Bildstreifen umfasst, wobei die ersten, zweiten und dritten Sätze von Bildstreifen entlang der ersten Richtung verschachtelt sind, und wobei die ersten, zweiten und dritten Sätze von Bildstreifen jeweils eine Periodizität entlang der ersten Richtung aufweisen, welche wesentlich dieselbe wie, oder ein integrales Vielfache, einer Periodizität der Anordnung der Fokussierelemente ist, wobei vorzugsweise jeder eines ersten Teilsatzes des dritten Satzes von Bildstreifen einen fünften Bereich umfasst, der eine fünfte optisch variablen Effekt generierende Reliefstruktur aufweist.

10. Sicherheitselement nach irgendeinem der vorhergehenden Ansprüche, wobei eine oder mehrere der optisch variablen Effekt generierenden Reliefstrukturen ein Beugungsgitter zum Generieren eines optisch variablen Effekts umfassen, der ein beugender optischer Effekt ist, wobei das Beugungsgitter Gitterelemente umfasst, die in einem Winkel von höchstens 45° zur ersten Richtung, vorzugsweise höchstens 20° zur ersten Richtung, noch bevorzugter höchstens 10° zur ersten Richtung derart orientiert sind, dass die beugenden Farben des beugenden optischen Effekts via die Fokussierelemente angezeigt werden.

11. Sicherheitselement nach irgendeinem der vorhergehenden Ansprüche, wobei der erste Satz von Bildstreifen ferner einen oder mehrere zusätzlichen Bereiche umfasst, die keine optisch variablen Effekt generierende Reliefstruktur umfassen, und vorzugsweise wobei der eine oder mehrere zusätzlichen Bereiche eine Licht absorbierende Reliefstruktur umfassen.

12. Verfahren zur Bildung eines Sicherheitselements, umfassend:
Bereitstellen einer Anordnung von Fokussierelementen (10), die eine Fokussierelementebene definieren, wobei jedes Fokussierelement angepasst ist, Licht nur in eine erste Richtung zu fokussieren, wobei die Fokussierelemente in einer regelmäßigen Anordnung entlang der ersten Richtung (Lv) angeordnet sind;
Bereitstellen einer Anordnung von Bildstreifen (100, 200, 300), welche die Anordnung von Fokussierelementen überlappen, wobei die Anordnung von Bildstreifen zumindest einen ersten Satz von Bildstreifen (100) und einen zweiten Satz von Bildstreifen (200) umfasst, wobei die ersten und zweiten Sätze von Bildstreifen entlang der ersten Richtung (Lv) verschachtelt sind, und wobei die ersten und zweiten Sätze von Bildstreifen jeweils eine Periodizität entlang der ersten Richtung aufweisen, welche wesentlich dieselbe wie, oder ein integrales Vielfaches, eine(r) Periodizität der Anordnung von Fokussierelementen (10) ist;
wobei die Anordnung von Fokussierelementen (10) und die Anordnung von Bildstreifen (100, 200, 300) derart angeordnet ist, dass, während das Sicherheitselement um eine zweite Richtung rotiert wird, die zweite Richtung die Richtung senkrecht zur ersten Richtung (Lv) und innerhalb der Fokussierelementebene ist, wobei der erste Satz von Bildstreifen (100) via die Anordnung von Fokussierelementen (10) in einem ersten Betrachtungswinkel angezeigt wird und der zweite Satz von Bildstreifen (200) via die Anordnung von Fokussierelementen (10) in einem zweiten Betrachtungswinkel angezeigt wird;
wobei jeder von zumindest einem ersten Teilsatz der Bildstreifen des ersten Satzes von Bildstreifen (110), der eine erste Reliefstruktur (111) aufweist, die einen ersten optisch variablen Effekt generiert, und einen zweiten Bereich (120) umfasst, der eine zweite Reliefstruktur (121) auf weist, die einen zweiten optisch variablen Effekt generiert, wobei sich die erste optisch variablen Effekt generierende Reliefstruktur von der zweiten optisch variablen Effekt generierenden Reliefstruktur in mindestens einem, nämlich der Neigung der Reliefstruktur, der Orientierung der Reliefstruktur und der Größe, Form und/oder dem Profil der Elemente der Reliefstruktur derart unterscheidet, dass die Erscheinungsbilder der ersten und zweiten Bereiche verschieden variieren, während das Sicherheitselement um die erste Richtung (Lv) gedreht wird, wobei jeder Bildstreifen des ersten Teilsatzes des ersten Satzes von Bildstreifen eine Vielzahl von ersten Bildbereichen und eine Vielzahl von zweiten Bildbereichen umfasst, wobei die ersten Bildbereiche und die zweiten Bildbereiche entlang jedes Bildstreifens des ersten Teilsatzes des ersten Satzes von Bildstreifen miteinander verschachtelt sind, und wobei der erste Bereich jedes Bildstreifens des ersten Teilsatzes des ersten Satzes von Bildstreifen über die ersten Bildbereiche verteilt ist und wobei der zweite Bereich jedes Bildstreifens des ersten Teilsatzes des ersten Satzes von Bildstreifen über die zweiten Bildbereiche verteilt ist, wobei jeder der ersten Sätze von Bildstreifen einen jeweiligen Abschnitt eines ersten optisch variablen Bildes trägt, wobei das erste optisch variable Bild mindestens erste und zweite Unterbilder umfasst, wobei der erste Bereich jedes Bildstreifens des ersten Teilsatzes des ersten Satzes von Bildstreifen entsprechend den Bildinformationen des ersten Unterbildes räumlich über die ersten Bildbereiche angeordnet ist und wobei der zweite Bereich jedes Bildstreifens des ersten Teilsatzes des ersten Satzes von Bildstreifen entsprechend den Bildinformationen des zweiten Unterbildes räumlich über die zweiten Bildbereiche angeordnet ist, wobei jeder Bildstreifen, wobei der erste Teilsatz des ersten Satzes von Bildstreifen eine Vielzahl von ersten Bildbereichen und eine Vielzahl von zweiten Bildbereichen umfasst, wobei die ersten Bildbereiche und die zweiten Bildbereiche entlang jedes Bildstreifens des ersten Teilsatzes des ersten Satzes von Bildstreifen miteinander verschachtelt sind, und der erste Bereich jedes Bildstreifens des ersten Teilsatzes des ersten Satzes von Bildstreifen über die ersten Bildbereiche verteilt ist und der zweite Bereich jedes Bildstreifens des ersten Teilsatzes des ersten Satzes von Bildstreifen über die zweiten Bildbereiche verteilt ist, wobei jeder des ersten Satzes von Bildstreifen einen jeweiligen Abschnitt eines ersten optisch variablen Bildes trägt, wobei das erste optisch variable Bild mindestens erste und zweite Unterbilder umfasst, wobei der erste Bereich jedes Bildstreifens des ersten Teilsatzes des ersten Satzes von Bildstreifen entsprechend der Bildinformation des ersten Unterbildes räumlich über die ersten Bildbereiche angeordnet ist und wobei der zweite Bereich jedes Bildstreifens des ersten Teilsatzes des ersten Satzes von Bildstreifen entsprechend der Bildinformation des zweiten Unterbildes räumlich über die zweiten Bildbereiche angeordnet ist, wobei die den optisch variablen Effekt erzeugende Reliefstruktur jedes ersten Bereichs so konfiguriert ist, dass die ersten Bereiche beim Drehen des Sicherheitselements um die erste Richtung einen ersten optisch variablen Effekt über einen ersten Betrachtungswinkelbereich aufweisen und dadurch das erste Unterbild anzeigen und wobei die zweite, einen optisch variablen Effekt erzeugende Reliefstruktur jedes zweiten Bereichs so konfiguriert ist, dass die zweiten Bereiche beim Drehen des Sicherheitselements um die erste Richtung einen zweiten optisch variablen Effekt über einen zweiten Betrachtungswinkelbereich aufweisen, der sich vom ersten Betrachtungswinkelbereich unterscheidet, und dadurch das zweite Unterbild anzeigen.

13. Sicherheitselement, umfassend:
Eine Anordnung von Fokussierelementen (10), die eine Fokussierelementebene definieren, wobei jedes Fokussierelement angepasst ist, Licht nur in eine erste Richtung zu fokussieren, wobei die Fokussierelemente in einer regelmäßigen Anordnung entlang der ersten Richtung (Lv) angeordnet sind;
eine Anordnung von Bildstreifen (100, 200, 300), welche die Anordnung von Fokussierelementen (10) überlappen, wobei die Anordnung von Bildstreifen (100, 200, 300) zumindest einen ersten Satz von Bildstreifen (100) und einen zweiten Satz von Bildstreifen (200) umfasst, wobei die ersten und zweiten Sätze von Bildstreifen (100, 200) entlang der ersten Richtung (Lv) verschachtelt sind, und wobei die ersten und zweiten Sätze von Bildstreifen jeweils eine Periodizität entlang der ersten Richtung aufweisen, welche wesentlich dieselbe wie oder ein integrales Vielfaches, eine(r) Periodizität der Anordnung von Fokussierelementen (10) ist;
wobei die Anordnung von Fokussierelementen (10) und die Anordnung von Bildstreifen (100, 200, 300) derart angeordnet sind, dass, während das Sicherheitselement um eine zweite Richtung rotiert wird, die zweite Richtung die Richtung senkrecht zur ersten Richtung (Lv) und innerhalb der Fokussierelementebene ist, wobei der erste Satz von Bildstreifen (100) via die Anordnung von Fokussierelementen in einem ersten Betrachtungswinkel angezeigt wird und der zweite Satz von Bildstreifen (200) via die Anordnung von Fokussierelementen in einem zweiten Betrachtungswinkel angezeigt wird;
wobei jeder von mindestens einem ersten Teilsatz der Bildstreifen des ersten Satzes von Bildstreifen einen ersten Bereich (110) mit einer ersten beugenden Reliefstruktur (111) zum Erzeugen eines optisch variablen Effekts, der ein beugender optischer Effekt ist, und einen zweiten Bereich (120) mit einer zweiten beugenden Reliefstruktur (121) zum Erzeugen eines optisch variablen Effekts, der ein beugender optischer Effekt ist, umfasst, wobei sich die erste beugende Reliefstruktur von der zweiten beugenden Reliefstruktur in mindestens einem der folgenden Punkte unterscheidet: Neigung der Reliefstruktur, Ausrichtung der Reliefstruktur und Größe, Form und/oder Profil der Elemente der Reliefstruktur, sodass das Erscheinungsbild des ersten und des zweiten Bereichs (110, 120) unterschiedlich variiert, wenn das Sicherheitselement um die erste Richtung (Lv) gedreht wird;
wobei jeder Bildstreifen des ersten Satzes einen jeweiligen Abschnitt eines ersten optisch variablen Bildes trägt und wobei die ersten und zweiten Bereiche des ersten Teilsatzes des ersten Satzes von Bildstreifen räumlich entsprechend den Bildinformationen des ersten optisch variablen Bildes angeordnet sind und wobei sich die erste beugende Reliefstruktur von der zweiten beugenden Reliefstruktur in mindestens einem der folgenden Punkte unterscheidet: Neigung der Reliefstruktur, Ausrichtung der Reliefstruktur und Größe, Form und/oder Profil der Elemente der Reliefstruktur, sodass beim Drehen des Sicherheitselements um die erste Richtung der erste Bereich über einen ersten Betrachtungswinkelbereich einen ersten optisch variablen Effekt aufweist und der zweite Bereich über einen zweiten Betrachtungswinkelbereich, der sich vom ersten Betrachtungswinkelbereich unterscheidet, einen zweiten optisch variablen Effekt aufweist.

14. Verfahren zur Bildung eines Sicherheitselements, umfassend:
Bereitstellen einer Anordnung von Fokussierelementen (10), die eine Fokussierelementebene definieren, wobei jedes Fokussierelement angepasst ist, Licht nur in eine erste Richtung zu fokussieren, wobei die Fokussierelemente in einer regelmäßigen Anordnung entlang der ersten Richtung (Lv) angeordnet sind;
Bereitstellen einer Anordnung von Bildstreifen (100, 200, 300), welche die Anordnung von Fokussierelementen überlappen, wobei die Anordnung von Bildstreifen zumindest einen ersten Satz von Bildstreifen (100) und einen zweiten Satz von Bildstreifen (200) umfasst, wobei die ersten und zweiten Sätze von Bildstreifen entlang der ersten Richtung (Lv) verschachtelt sind, und wobei die ersten und zweiten Sätze von Bildstreifen jeweils eine Periodizität entlang der ersten Richtung aufweisen, welche wesentlich dieselbe wie, oder ein integrales Vielfaches, eine Periodizität der Anordnung von Fokussierelementen (10) ist;
wobei die Anordnung von Fokussierelementen (10) und die Anordnung von Bildstreifen (100, 200, 300) derart angeordnet ist, dass, während das Sicherheitselement um eine zweite Richtung rotiert wird, die zweite Richtung die Richtung senkrecht zur ersten Richtung (Lv) und innerhalb der Fokussierelementebene ist, wobei der erste Satz von Bildstreifen (100) via die Anordnung von Fokussierelementen (10) in einem ersten Betrachtungswinkel angezeigt wird und der zweite Satz von Bildstreifen (200) via die Anordnung von Fokussierelementen (10) in einem zweiten Betrachtungswinkel angezeigt wird;
wobei jeder von mindestens einem ersten Teilsatz der Bildstreifen des ersten Satzes von Bildstreifen einen ersten Bereich (110) mit einer ersten beugenden Reliefstruktur (111) zum Erzeugen eines optisch variablen Effekts, der ein beugender optischer Effekt ist, und einen zweiten Bereich (120) mit einer zweiten beugenden Reliefstruktur (121) zum Erzeugen eines optisch variablen Effekts, der ein beugender optischer Effekt ist, umfasst, wobei sich die erste beugende Reliefstruktur von der zweiten beugenden Reliefstruktur in mindestens einem der folgenden Punkte unterscheidet: Neigung der Reliefstruktur, Ausrichtung der Reliefstruktur und Größe, Form und/oder Profil der Elemente der Reliefstruktur, sodass das Erscheinungsbild des ersten und des zweiten Bereichs unterschiedlich variiert, wenn das Sicherheitselement um die erste Richtung (Lv) gedreht wird;
wobei jeder Bildstreifen des ersten Satzes einen jeweiligen Abschnitt eines ersten optisch variablen Bildes trägt und wobei die ersten und zweiten Bereiche des ersten Teilsatzes des ersten Satzes von Bildstreifen räumlich entsprechend den Bildinformationen des ersten optisch variablen Bildes angeordnet sind und wobei sich die erste beugende Reliefstruktur von der zweiten beugenden Reliefstruktur in mindestens einem der folgenden Punkte unterscheidet: Neigung der Reliefstruktur, Ausrichtung der Reliefstruktur und Größe, Form und/oder Profil der Elemente der Reliefstruktur, sodass beim Drehen des Sicherheitselements um die erste Richtung der erste Bereich über einen ersten Betrachtungswinkelbereich einen ersten optisch variablen Effekt aufweist und der zweite Bereich über einen zweiten Betrachtungswinkelbereich, der sich vom ersten Betrachtungswinkelbereich unterscheidet, einen zweiten optisch variablen Effekt aufweist.

## Revendications

1. Élément de sécurité comprenant :
un réseau d'éléments de focalisation (10) définissant un plan d'éléments de focalisation, chaque élément de focalisation étant adapté pour concentrer la lumière dans une première direction seulement, les éléments de focalisation étant agencés dans un réseau régulier le long de la première direction (Lv) ;
un réseau de bandes d'images (100, 200, 300) chevauchant le réseau d'éléments de focalisation (10), le réseau de bandes d'images (100, 200, 300) comprenant au moins une première série de bandes d'images (100) et une deuxième série de bandes d'images (200), les première et deuxième séries de bandes d'images (100, 200) étant entrelacées dans la première direction (Lv), et les première et deuxième séries de bandes d'images présentant chacune une périodicité dans la première direction, qui est essentiellement la même que la périodicité du réseau d'éléments de focalisation (10) ou un multiple entier de celle-ci ;
le réseau d'éléments de focalisation (10) et le réseau de bandes d'images (100, 200, 300) étant agencés de sorte que, lors de la rotation de l'élément de sécurité dans une deuxième direction, la deuxième direction étant la direction perpendiculaire à la première direction (Lv), et comprise dans le plan de l'élément de focalisation, la première série de bandes d'images (100) est affichée par le biais du réseau d'éléments de focalisation à un premier angle de visualisation et la deuxième série de bandes d'images (200) est affichée par le biais du réseau d'éléments de focalisation à un deuxième angle de visualisation ;
chacune d'au moins une première sous-série des bandes d'images de la première série de bandes d'images comprenant une première zone (110) possédant une première structure en relief produisant un effet optiquement variable (111), et une deuxième zone (120) possédant une deuxième structure en relief produisant un effet optiquement variable (121), la première structure en relief produisant un effet optiquement variable se distinguant de la deuxième structure en relief produisant un effet optiquement variable par au moins un des suivants : le pas de la structure en relief, l'orientation de la structure en relief et la taille, la forme et/ou le profil des éléments de la structure en relief, de sorte que l'aspect des première et deuxième zones (110, 120) varie différemment selon la rotation de l'élément de sécurité autour de la première direction (Lv), chaque bande d'image de la première sous-série de la première série de bandes d'images comprenant une pluralité de premiers secteurs d'images et une pluralité de deuxièmes secteurs d'images, les premiers secteurs d'images et les deuxièmes secteurs d'images étant entrelacés mutuellement le long de chaque bande d'images de la première sous-série de la première série de bandes d'image, et la première zone de chaque bande d'images de la première sous-série de la première série de bandes d'images étant distribuée sur les premiers secteurs d'images, et la deuxième zone de chaque bande d'images de la première sous-série de la première série de bandes d'images étant distribuée sur les deuxièmes secteurs d'images, chacune de la première série de bandes d'images transportant une partie correspondante d'une première image optiquement variable, la première image optiquement variable comprenant au moins des première et deuxième sous-images, la première zone de chaque bande d'images de la première sous-série de la première série de bandes d'images étant agencée spatialement sur les premiers secteurs d'images conformément à des informations d'images de la première sous-image, et la deuxième zone de chaque bande d'images de la première sous-série de la première série de bandes d'images étant agencée spatialement sur les deuxièmes secteurs d'images conformément à des informations d'images de la deuxième sous-image, la structure en relief produisant un effet optiquement variable de chaque première zone étant configurée de sorte que, lors de la rotation de l'élément de sécurité autour de la première direction, les premières zones présentent un premier effet optiquement variable sur une première plage d'angles de visualisation, en affichant ainsi la première sous-image, et la deuxième structure en relief produisant un effet optiquement variable de chaque deuxième zone étant configurée de sorte que, lors de la rotation de l'élément de sécurité autour de la première direction, les deuxièmes zones présentent un deuxième effet optiquement variable sur une deuxième plage d'angles de visualisation différente de la première plage d'angles de visualisation, en affichant ainsi le deuxième sous-image.

2. Élément de sécurité selon une quelconque des revendications précédentes, l'orientation de la première structure en relief produisant un effet optiquement variable se distinguant de l'orientation de la deuxième structure en relief produisant un effet optiquement variable de sorte que, lors de la rotation de cet élément de sécurité autour de la première direction, la première zone présente le premier effet optiquement variable sur la première plage d'angles de visualisation, et la deuxième zone présente le deuxième effet optiquement variable sur la deuxième plage d'angles de visualisation, et/ou la première structure en relief produisant un effet optiquement variable se distinguant de la deuxième structure en relief produisant un effet optiquement variable par au moins un des suivants : le pas de la structure en relief et la taille, la forme et/ou le profil des éléments de la structure en relief, de sorte que, lors de la rotation de l'élément de sécurité dans la première direction, la première zone présente le premier effet optiquement variable sur la première plage d'angles de visualisation, et la deuxième zone présente le deuxième effet optiquement variable sur la deuxième plage d'angles de visualisation, et, de préférence, la première plage d'angles de visualisation ne chevauche pas substantiellement la deuxième plage d'angles de visualisation.

3. Élément de sécurité selon une quelconque des revendications précédentes, la première structure en relief produisant un effet optiquement variable se distinguant de la deuxième structure en relief produisant un effet optiquement variable par au moins un des suivants : le pas de la structure en relief, l'orientation de la structure en relief, et la taille, la forme et/ou le profil des éléments de la structure en relief, de sorte que, lors de la rotation de l'élément de sécurité autour de la première direction, la première zone présente le premier effet optiquement variable et la deuxième zone présente le deuxième effet optiquement variable, le deuxième effet optiquement variable étant différent du premier effet optiquement variable.

4. Élément de sécurité selon une quelconque des revendications précédentes, la première plage d'angles de visualisation et la deuxième plage d'angles de visualisation ne se chevauchant pas substantiellement, afin qu'un effet de changement d'image entre la première sous-image et la deuxième sous-image soit exposée par les première et deuxième zones lors de la rotation de l'élément de sécurité autour de la première direction.

5. Élément de sécurité selon une quelconque des revendications précédentes, les premières zones étant des zones à première composante chromatique de la première sous-image, la première structure en relief produisant un effet optiquement variable étant configurée pour présenter un premier effet chromatique diffractif sur une première plage d'angles de visualisation lors de la rotation de **l'élément** de sécurité dans la première direction, et les premières zones d'images comprenant, en outre, des zones à deuxième composante chromatique de la première sous-image, les zones à deuxième composante chromatique présentant une structure en relief produisant un effet optiquement variable configurée pour présenter un deuxième effet chromatique diffractif sur la première plage d'angles de visualisation, les première et deuxième zones à composante chromatique étant agencées de manière à fournir des première et deuxième composantes chromatiques de la première sous-image, les zones de première image comportant, en outre, de préférence des zones à troisième composante chromatique de la première sous-image, les zones à troisième composante chromatique présentant une structure en relief produisant un effet optiquement variable configurée pour présenter un troisième effet chromatique diffractif sur la première plage d'angles de visualisation, les zones à troisième composante chromatique étant agencées de manière à fournir une troisième composante chromatique de la première sous-image.

6. Élément de sécurité selon une quelconque des revendications précédentes, chacune d'une première sous-série de la deuxième série de bandes d'images comprenant une troisième zone présentant une troisième structure en relief produisant un effet optiquement variable, chacune de la deuxième série de bandes d'images comportant, de préférence, une partie respective d'une deuxième image optiquement variable, et la troisième zone étant spatialement agencée conformément à des informations de la deuxième image optiquement variable et/ou chacune de la première sous-série de la deuxième série de bandes d'images comportant une quatrième zone possédant une quatrième structure en relief produisant un effet optiquement variable, la troisième structure en relief produisant un effet optiquement variable se distinguant de la quatrième structure en relief produisant un effet optiquement variable par au moins un des suivants : le pas de la structure en relief, l'orientation de la structure en relief , et la taille, la forme et le profil des éléments de la structure en relief, de sorte que les troisième et quatrième zones présentent des aspects variant différemment lors de la rotation de l'élément de sécurité dans la première direction.

7. Élément de sécurité selon une quelconque des revendications précédentes, une ou plusieurs des structures en relief produisant des effets optiquement variables comprenant une structure en relief diffractive, par exemple, un réseau de diffraction, pour la production d'un effet optiquement variable constituant un effet optique diffractif.

8. Élément de sécurité selon une quelconque des revendications précédentes, la première zone comprenant un premier réseau de diffraction présentant une première orientation, et la deuxième zone comprenant un deuxième réseau de diffraction avec une deuxième orientation différente de la première orientation.

9. Élément de sécurité selon une quelconque des revendications précédentes, le réseau de bandes d'images comportant, en outre, une troisième série de bandes d'images, les première, deuxième et troisième séries de bandes d'images étant entrelacées dans la première direction, et les première, deuxième et troisième bandes d'images présentant chacune une périodicité dans la première direction qui est essentiellement la même qu'une périodicité du réseau d'éléments de focalisation, ou un multiple entier de celle-ci, chacune d'une première sous-série de la troisième série de bandes d'images comprenant de préférence une cinquième zone présentant une cinquième structure en relief produisant un effet optiquement variable.

10. Élément de sécurité selon une quelconque des revendications précédentes, une ou plusieurs des structures en relief produisant un effet optiquement variable comprenant un réseau de diffraction pour la production d'un effet optiquement variable qui est un effet optique diffractif, le réseau de diffraction comprenant des éléments de réseau orientés à un angle ne dépassant pas 45° à la première direction, de préférence ne dépassant pas 20° à la première direction, mieux encore ne dépassant pas 10° à la première direction, afin que les couleurs diffractives de l'effet optique diffractif soient affichées par le biais des éléments de focalisation.

11. Élément de sécurité selon une quelconque des revendications précédentes, la première série de bandes d'images comprenant, en outre, une ou plusieurs zones supplémentaires ne comprenant pas une structure en relief produisant un effet optiquement variable, et, de préférence, l'une ou plusieurs zones supplémentaires comprenant une structure en relief absorbant la lumière.

12. Procédé de formation d'un élément de sécurité comprenant :
l'agencement d'un réseau d'éléments de focalisation (10) définissant un plan d'éléments de focalisation, chaque élément de focalisation étant adapté pour concentrer la lumière dans une première direction seulement, les éléments de focalisation étant agencés dans un réseau régulier le long de la première direction (Lv) ;
l'agencement d'un réseau de bandes d'images (100, 200, 300) chevauchant le réseau d'éléments de focalisation, le réseau de bandes d'images comprenant au moins une première série de bandes d'images (100) et une deuxième série de bandes d'images (200), les première et deuxième séries de bandes d'images étant entrelacées dans la première direction (Lv), et les première et deuxième séries de bandes d'images présentant chacune une périodicité dans la première direction qui est essentiellement la même que la périodicité du réseau d'éléments de focalisation (10) ou un multiple entier de celle-ci ;
le réseau d'éléments de focalisation (10) et le réseau de bandes d'images (100, 200, 300) étant agencés de sorte que, lors de la rotation de l'élément de sécurité dans une deuxième direction, la deuxième direction étant la direction perpendiculaire à la première direction (Lv), et comprise dans le plan de l'élément de focalisation, la première série de bandes d'images (100) étant affichée par le biais du réseau d'éléments de focalisation (10) à un premier angle de visualisation et la deuxième série de bandes d'images (200) étant affichée par le biais du réseau d'éléments de focalisation (10) à un deuxième angle de visualisation ;
chacune d'au moins une première sous-série des bandes d'images de la première série de bandes d'images comprenant une première zone (110) possédant une première structure en relief produisant un effet optiquement variable (111), et une deuxième zone (120) possédant une deuxième structure en relief produisant un effet optiquement variable (121), la première structure en relief produisant un effet optiquement variable se distinguant de la deuxième structure en relief produisant un effet optiquement variable par au moins un des suivants : le pas de la structure en relief, l'orientation de la structure en relief et la taille, la forme et/ou le profil des éléments de la structure en relief, de sorte que l'aspect des première et deuxième zones varie différemment selon la rotation de l'élément de sécurité autour de la première direction (Lv), chaque bande d'image de la première sous-série de la première série de bandes d'images comprenant une pluralité de premiers secteurs d'images et une pluralité de deuxièmes secteurs d'images, les premiers secteurs d'images et les deuxièmes secteurs d'images étant entrelacés mutuellement le long de chaque bande d'images de la première sous-série de la première série de bandes d'image, et la première zone de chaque bande d'images de la première sous-série de la première série de bandes d'images étant distribuée sur les premiers secteurs d'images, et la deuxième zone de chaque bande d'images de la première sous-série de la première série de bandes d'images étant distribuée sur les deuxièmes secteurs d'images, chacune de la première série de bandes d'images transportant une partie correspondante d'une première image optiquement variable, la première image optiquement variable comprenant au moins des première et deuxième sous-images, la première zone de chaque bande d'images de la première sous-série de la première série de bandes d'images étant agencée spatialement sur les premiers secteurs d'images conformément à des informations d'images de la première sous-image, et la deuxième zone de chaque bande d'images de la première sous-série de la première série de bandes d'images étant agencée spatialement sur les deuxièmes secteurs d'images conformément à des informations d'images de la deuxième sous-image, la structure en relief produisant un effet optiquement variable de chaque première zone étant configurée de sorte que, lors de la rotation de l'élément de sécurité autour de la première direction, les premières zones présentent un premier effet optiquement variable sur une première plage d'angles de visualisation, en affichant ainsi la première sous-image, et la deuxième structure en relief produisant un effet optiquement variable de chaque deuxième zone étant configurée de sorte que, lors de la rotation de l'élément de sécurité autour de la première direction, les deuxièmes zones présentent un deuxième effet optiquement variable sur une deuxième plage d'angles de visualisation différente de la première plage d'angles de visualisation, en affichant ainsi le deuxième sous-image.

13. Élément de sécurité comprenant :
un réseau d'éléments de focalisation (10) définissant un plan d'éléments de focalisation, chaque élément de focalisation étant adapté pour concentrer la lumière dans une première direction seulement, les éléments de focalisation étant agencés dans un réseau régulier le long de la première direction (Lv) ;
un réseau de bandes d'images (100, 200, 300) chevauchant le réseau d'éléments de focalisation (10), le réseau de bandes d'images (100, 200, 300) comprenant au moins une première série de bandes d'images (100) et une deuxième série de bandes d'images (200), les première et deuxième séries de bandes d'images (100, 200) étant entrelacées dans la première direction (Lv), et les première et deuxième séries de bandes d'images présentant chacune une périodicité dans la première direction qui est essentiellement la même qu'une périodicité du réseau d'éléments de focalisation (10), ou un multiple entier de celle-ci ;
le réseau d'éléments de focalisation (10) et le réseau de bandes d'images (100, 200, 300) étant agencés de sorte que, lors de la rotation de l'élément de sécurité dans une deuxième direction, la deuxième direction étant la direction perpendiculaire à la première direction (Lv), et comprise dans le plan de l'élément de focalisation, la première série de bandes d'images (100) étant affichée par le biais du réseau d'éléments de focalisation à un premier angle de visualisation et la deuxième série de bandes d'images (200) étant affichée par le biais du réseau d'éléments de focalisation à un deuxième angle de visualisation ;
chacune d'au moins une première sous-série des bandes d'images de la première série de bandes d'images comprenant une première zone (110) possédant une première structure en relief diffractive (111) pour la production d'un effet optiquement variable qui est un effet optique diffractif, et une deuxième zone (120) possédant une deuxième structure en relief diffractive (121) pour la production d'un effet optiquement variable qui est un effet optique diffractif, la première structure en relief diffractive se distinguant de la deuxième structure en relief diffractive par au moins un des suivants : le pas de la structure en relief, l'orientation de la structure en relief, et la taille, la forme et/ou le profil des éléments de la structure en relief, de sorte que l'aspect des première et deuxième zones (110, 120) varie différemment lors de la rotation de l'élément de sécurité autour de la première direction (Lv),
chacune de la première série de bandes d'images transportant une partie respective d'une première image optiquement variable, et les première et deuxième zones de la première sous-série de la première série de bandes d'images étant agencées spatialement conformément aux informations d'images de la première image optiquement variable, et la première structure en relief diffractive se distinguant de la deuxième structure en relief diffractive en ce qui concerne au moins un des suivants : le pas de la structure en relief, l'orientation de la structure en relief, et la taille, la forme et/ou le profil des éléments de la structure en relief, de sorte que, lors de la rotation de l'élément de sécurité autour de la première direction, la première zone présente un premier effet optiquement variable sur une première plage d'angles de visualisation, et la deuxième zone présente un deuxième effet optiquement variable sur une deuxième plage d'angles de visualisation différente de la première plage d'angles de visualisation.

14. Procédé de formation d'un élément de sécurité comprenant :
l'agencement d'un réseau d'éléments de focalisation (10) définissant un plan d'éléments de focalisation, chaque élément de focalisation étant adapté pour concentrer la lumière dans une première direction seulement, les éléments de focalisation étant agencés dans un réseau régulier le long de la première direction (Lv) ;
l'agencement d'un réseau de bandes d'images (100, 200, 300) chevauchant le réseau d'éléments de focalisation, le réseau de bandes d'images comprenant au moins une première série de bandes d'images (100) et une deuxième série de bandes d'images (200), les première et deuxième séries de bandes d'images étant entrelacées dans la première direction (Lv), et les première et deuxième séries de bandes d'images présentant chacune une périodicité dans la première direction qui est essentiellement la même qu'une périodicité du réseau d'éléments de focalisation (10), ou un multiple entier de celle-ci ;
le réseau d'éléments de focalisation (10) et le réseau de bandes d'images (100, 200, 300) étant agencés de sorte que, lors de la rotation de l'élément de sécurité dans une deuxième direction, la deuxième direction étant la direction perpendiculaire à la première direction (Lv), et comprise dans le plan de l'élément de focalisation, la première série de bandes d'images (100) est affichée par le biais du réseau d'éléments de focalisation(10) à un premier angle de visualisation et la deuxième série de bandes d'images (200) est affichée par le biais du réseau d'éléments de focalisation (10) à un deuxième angle de visualisation ;
chacune d'au moins une première sous-série des bandes d'images de la première série de bandes d'images comprenant une première zone (110) possédant une première structure en relief diffractive (111) pour la production d'un effet optiquement variable qui est un effet optique diffractif, et une deuxième zone (120) possédant une deuxième structure en relief diffractive (121) pour la production d'un effet optiquement variable qui est un effet optique diffractif, la première structure en relief diffractive se distinguant de la deuxième structure en relief diffractive par au moins un des suivants : le pas de la structure en relief, l'orientation de la structure en relief, et la taille, la forme et/ou le profil des éléments de la structure en relief, de sorte que l'aspect des première et deuxième zones varie différemment lors de la rotation de l'élément de sécurité autour de la première direction (Lv) ;
chacune de la première série de bandes d'images transportant une partie respective d'une première image optiquement variable, et les première et deuxième zones de la première sous-série de la première série de bandes d'images étant agencées spatialement conformément aux informations d'images de la première image optiquement variable, et la première structure en relief diffractive se distinguant de la deuxième structure en relief diffractive par au moins un des suivants : le pas de la structure en relief, l'orientation de la structure en relief, et la taille, la forme et/ou le profil des éléments de la structure en relief, de sorte que, lors de la rotation de l'élément de sécurité autour de la première direction, la première zone présente un premier effet optiquement variable sur une première plage d'angles de visualisation, et la deuxième zone présente un deuxième effet optiquement variable sur une deuxième plage d'angles de visualisation différente de la première plage d'angles de visualisation.
